# EUROPEAN PATENT SPECIFICATION

(11) **EP 4 371 992 B1**
(45) Date of publication and mention of the grant of the patent: **02.07.2025**
(21) Application number: 23171798.4
(22) Date of filing: 05.05.2023
(51) Int. Cl.: C07F 9/48, C07F 9/6584, C07F 9/30

(54) **METHODS OF PREPARING GLUFOSINATE**
VERFAHREN ZUR HERSTELLUNG VON GLUFOSINAT
PROCÉDÉS DE PRÉPARATION DE GLUFOSINATE

(30) Priority: 17.11.2022 CN 202211440553; 10.01.2023 CN 202310033931
(43) Date of publication of application: 22.05.2024
(73) Proprietor: YongNong BioSciences Co., Ltd, ShangYu, Zhejiang 312369 (CN); Ningxia YongNong BioSciences Co., Ltd, YinChuan City, Ningxia 750411 (CN)
(72) Inventor: TANG, Wenjie, ShangYu, 312369 (CN); WU, Chengjun, ShangYu, 312369 (CN); LI, Nan, ShangYu, 312369 (CN); XU, Jianjie, ShangYu, 312369 (CN); TANG, Xianzhong, ShangYu, 312369 (CN); MAO, Chunhui, ShangYu, 312369 (CN)
(74) Representative: Loyer & Abello

(56) References cited:
- EP-A1- 4 043 468
- EP-A1- 4 063 374
- WO-A1-92/02641
- US-A1- 2014 303 315
- NACHEV I: "Total synthesis and enzyme-substrate interaction of D-, DL-, and L-phosphinotricine, 'bialaphos' (SF-1293) and its cyclic analogs", JOURNAL OF THE CHEMICAL SOCIETY, PERKIN TRANSACTIONS 1, ROYAL SOCIETY OF CHEMISTRY, CAMBRIDGE, UK, vol. 89, no. 1, 1 January 1989 (1989-01-01), pages 125 - 131, XP002087193, ISSN: 0300-922X, DOI: 10.1039/P19890000125
- "Names Reactions", 1 January 2014, SPRINGER, article LI JIE JACK: "Names Reactions", XP093231940
- "Stratetic Applications of Named Reactions in Organic Synthesis", 1 January 2014, ELSEVIER, article KURTI LASZLO ET AL: "Stratetic Applications of Named Reactions in Organic Synthesis", XP093231943

## Description

### TECHNICAL FIELD

The present disclosure relates to the field of herbicides, and specifically, to methods of preparing glufosinate.

### BACKGROUND

Glufosinate is developed and produced by Hoechst AG in Germany with a chemical name of 4-[hydroxy(methyl)phosphono]-DL-homoalanine, which is a glutamine synthesis inhibitor and a non-selective contact herbicide. Its mechanism of action is to inhibit the activity of glutamine synthetase in plants, resulting in blocked glutamine synthesis, nitrogen metabolism disorder, and ammonium ion accumulation, thereby hindering the metabolism of the plants, and causing plants' death.

Glufosinate has the characteristics such as wide herbicidal spectrum, high activity, low toxicity, easy degradation in soil, safety to crops, small drift, good environmental compatibility, and rapid herbicidal action, and can control and quickly kill over 100 kinds of annual and perennial broad-leaved weeds and grass weeds, such as crabgrass and ryegrass.

In glufosinate racemates, only the L-isomer has a herbicidal activity and is easily decomposable in the soil, and thus has low toxicity to humans and animals, which further greatly reduce environmental burdens, and also has better activities and prevention effects against weeds with resistance than the racemates. Although glufosinate still dominates the global market, it is inevitable for the L-isomer to enter mainstream markets with technological innovation and progress.

The preparation of chiral pure L-glufosinate generally includes chemical and biological methods, and the chemical methods include racemate resolution, asymmetric synthesis and L-amino acid based total synthesis.

WO1995023805A1 discloses a method of preparing [L]- or [D]-homoalanin-4-yl-(methyl)phosphonic acid and its salts by the racemic resolution of D,L-homoalanin-4-yl-(methyl)phosphonic acid, via precipitation of one of the diastereoisomeric salts using chiral bases such as quinine or cinchonine. The usage of expensive chiral resolution reagents and low yields make it impractical for industry application.

US5442088A discloses a method of preparing L-glufosinate hydrochloride by using L-homoserine and its derivatives as starting material via ring-opening chlorination, esterification, Arbuzov reaction with methyl phosphite diester, and finally hydrolysis and purification, as shown below.

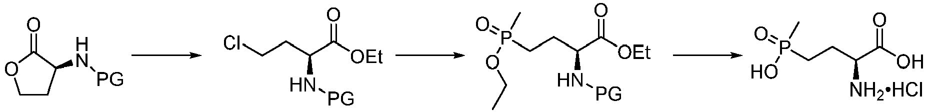

Although the multi-step procedure is straightforward and convenient, the Michaelis-Arbuzov reaction is generally carried out at a relatively high temperature (e.g. 130-140°C, or above) due to the low activity of chlorinated amino acid derivative. Meanwhile, the side reaction between the by-product ethyl chloride and diethyl methylphosphonite occurs at the reaction temperature, which further significantly increases the consumption of diethyl methylphosphonite, and results in low ee of L-isomer by racemization of starting material and product in situ.

CN113490671B discloses the preparation method of L-glufosinate using halogenated homoserine esters derivatives with or without amino-protection group as starting materials, comprising condensation and cyclization with monochloromethyl phosphinate, and hydrolyzation, as shown below.

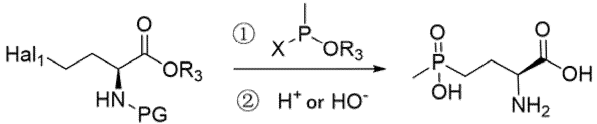

Multi-step procedures such as cyclization, chlorination, esterification and amino group protection are carried out by using L-homoserine as raw material with obviously prolonged preparation time. In addition, the Arbuzov reaction inevitably generates halogenated alkanes, which are Class III carcinogens destroying ozonosphere, especially the smaller molecular ones.

In addition, NACHEV I: "Total synthesis and enzyme-substrate interaction of D-, DL-, AND L-phosphinotricine, 'bialapos' (SF-1293) and its cyclic analogs", JOURNAL OF THE CHEMICAL SOCIETY, PERKIN TRANSCATIONS 1, ROYAL SOCIETY OF CHEMOSTRY, CAMRBIDGE, UK, vol. 89, no.1, 1, January 1989 (1989-01-01), pages 125-131, XP002087193 discloses that DL-Phosphonotricine (3) and its cyclic analogue (4) have been synthesized using the four-component isocyanide condensation of Ugi an Ugi-analogous three-component condensation, respectively. High selectivity of the enzyme-substrate interaction was established with the enzymes α-chymotrypsin, phosphodiesterase I, and alkaline mesintericopeptidase, as well as by separation of the racemic mixture to optical antipodes by the α-chymotrypsin.

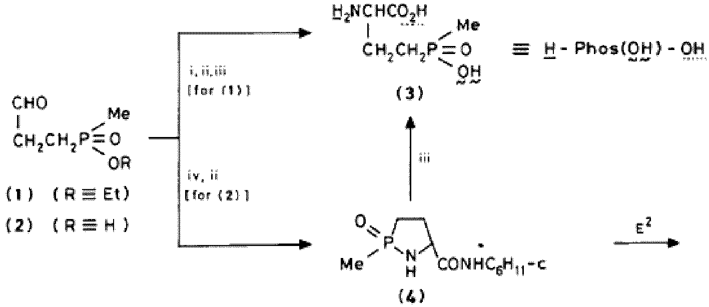

EP4043468A1 discloses a preparation method for glufosinate ammonium or a salt thereof, an enantiomer thereof, or mixtures of the enantiomer thereof in all ratios, comprising reacting a compound of formula (II) or a salt, an enantiomer, or mixtures of the enantiomer in all ratios with one or more compounds of formula (III) or mixtures thereof.

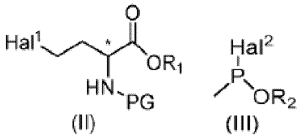

In recent years, with growing demand for glufosinate, developments and optimizations of the synthesis routes and procedures with mild reaction conditions, higher yield, lower cost, and simple operations are of great significance for reducing use of herbicides and increasing their efficiency.

### SUMMARY

For the sake of conciseness, the reference to a compound of formula (N) (e.g., a compound of formula (III)) described hereinafter may also include any optical isomer, geometric isomer, tautomer, isomer mixture, or agriculturally acceptable salts of the compound of formula (N).

The term "optical isomer" refers to various isomers formed by a compound which has one or more chiral centers, with each chiral center having an R configuration or an S configuration. The optical isomers include all diastereoisomers, enantiomers, mesoforms, racemates, or mixtures thereof. For example, the optical isomer can be separated via a chiral chromatographic column or chiral synthesis.

The term "geometric isomer" refers to a cis isomer, a trans isomer, an E isomer and a Z isomer of a compound containing a double bond therein. The geometric isomer includes a cis isomer, a trans isomer, an E isomer, a Z isomer, or a mixture thereof.

The term "tautomer" refers to an isomer generated from rapid movement of a specific atom in a molecule between two positions. A person skilled in the art can understand that tautomers can transform into each other, and may coexist when an equilibrium state is reached in a specific state.

Unless otherwise specified, the reference to a compound of formula (N) (e.g., a compound of formula (III)) described herein also includes an isotope-labeled compound obtained by substituting any atom in the compound with its isotopic atom. That is, the compound of formula (N) in the present disclosure includes all agriculturally acceptable isotopically labeled compounds of the compound of formula (N), where one or more atoms are substituted by an atom having the same atomic number as an atom usually found in nature but a different atomic mass or mass quantity.

Examples of isotopes suitable for inclusion in the compound in the present disclosure include isotopes of hydrogen, such as ²H(D) and ³H(T); isotopes of carbon, such as ¹¹C, ¹³C, and ¹⁴C; isotopes of chlorine, such as ³⁷Cl; isotopes of fluorine, such as ¹⁸F; isotopes of iodine such as ¹²³I and ¹²⁵I; isotopes of nitrogen such as ¹³N and ¹⁵N; isotopes of oxygen, such as ¹⁵O, ¹⁷O, and ¹⁸O; and isotopes of sulfur such as ³⁵S.

The isotopically labeled compound of formula (N) can generally be prepared by conventional techniques known to a person skilled in the art or by using a suitable isotopically labeled reagent in place of a previously used non-labeled reagent in a method analogous to that described in examples and preparations appended herein.

The compound of formula (N) may exist in a form of agriculturally acceptable salts such as an acid addition salt and/or a base addition salt of the compound of formula (N). Unless otherwise specified, the "agriculturally acceptable salt" used herein includes an acid addition salt or a base addition salt that may exist in the compound of formula (N).

The agriculturally acceptable salt of the compound of formula (N) includes the acid addition salt and base addition salt of the compound of formula (N). A suitable acid addition salt is formed by an acid that forms a non-toxic salt. Examples of the acid addition salt include, but are not limited to: acetate, adipate, aspartate, benzoate, benzenesulfonate, bicarbonate/carbonate, bisulfate/sulfate, borate, camphorsulfonate, citrate, cyclamate, edisylate, formate, fumarate, glucoheptonate, gluconate, glucuronic acid salt, hexafluorophosphate, 2-(4-hydroxybenzyl)benzoate, hydrochloride/chloride, hydrobromide/bromide, hydroiodide/iodide, 2-isethionate, lactate, malate, maleate, malonate, methanesulfonate, methylsulfate, naphthalate, 2-naphthalenesulfonate, nicotinate, nitrate, orotate, oxalate, palmitate, phosphate/hydrogen phosphate/dihydrogen phosphate, pyroglutamate, glucarate, stearate, salicylate, tannate, tartrate, tosylate, and trifluoroacetate. A suitable acid addition base is formed by a base that forms a non-toxic salt. Examples of the base addition salt include, but are not limited to, ammonium, aluminum, arginine, calcium, choline, diethylamine, diethanolamine, glycine, lysine, magnesium, meglumine, ethanolamine, potassium, sodium, lithium, tromethamine, and zinc salt. Half-salts of acids and bases such as hemisulfate and hemicalcium salts may also be formed. A method of preparing the agriculturally acceptable salt of the compound described herein is known to a person skilled in the art.

Some compounds in the present disclosure can be present in an unsolvated form or a solvated form (including a hydrated form). In general, the compounds of formula (N) fall within the scope of the present disclosure regardless of whether the compounds exist in the solvated or unsolvated form.

Some compounds in the present disclosure may exist in different crystalline or amorphous forms, and the compounds of formula (N) fall within the scope of the present disclosure regardless of the form of the compounds.

To avoid ambiguity, definitions of terms used herein are provided below. Unless otherwise specified, the terms used herein have the same meanings as those described blow.

As used in the specification of the disclosure and the appended claims, the singular forms, e.g., "a," "an" and "the" are intended to include the plural forms as well, unless the context clearly indicates otherwise.

A term "substituted" used herein means that one or more (preferably, 1 to 5, or more preferably, 1 to 3) hydrogen atoms in a group are independently replaced by a corresponding number of substituents.

A term "independently" used herein means that when the number of substituents is greater than one, these substituents may be the same or different.

A term "optional" or "optionally" used herein means that an event described by the term may or may not occur. For example, a group "optionally substituted" means that the group may be unsubstituted or substituted.

A term "heteroatom" used herein represents oxygen (O), nitrogen (N), or S(O)ₘ (where m may be 0, 1, or 2, namely, a sulfur atom S, a sulfoxide group SO, or a sulfonyl group S(O)₂).

A term "alkyl group" used herein refers to saturated aliphatic hydrocarbon, including straight and branched chains. In some embodiments, an alkyl group has, for example, 1-6 or 1-3 carbon atoms. For example, the term "C₁-C₆ alkyl group" refers to a straight or branched chain radical having 1 to 6 carbon atoms. A definition of the term "C₁-C₆ alkyl group" includes terms "C₁-C₆ alkyl group", "C₁-C₃ alkyl group", and "C₁-C₄ alkyl group". Examples of the alkyl group include, but are not limited to, a methyl group, an ethyl group, a propyl group, an isopropyl group, a butyl group, an isobutyl group, a sec-butyl group, a tert-butyl group, a pentyl group, a 2-pentyl group, a 3-pentyl group, an isopentyl group, a neopentyl group, an (R)-2-methylbutyl group, an (S)-2-methylbutyl group, a 3-methylbutyl group, a 2,3-dimethylpropyl group, a 2,3-dimethylbutyl group, a hexyl group, and the like.

A term "C₃-C₆ cycloalkyl group" used herein refers to a cycloalkyl group having 3 to 6 ring-forming carbon atoms. For example, the C₃-C₆ cycloalkyl group includes a cyclopropyl group, a cyclobutyl group, a cyclopentyl group, or a cyclohexyl group.

A term "n-membered heterocycloalkyl group" used herein refers to a cycloalkyl group having m ring-forming carbon atoms and (n-m) ring-forming heteroatoms, where the heteroatom is at least one selected from N, O, and S. For example, three-membered to six-membered heterocycloalkyl groups include, but are not limited to, oxetane, thietane, azetidine, tetrahydrofuran, tetrahydrothiophene, pyrrolidine, tetrahydropyran, tetrahydrothiopyran, piperidine, morpholine, and piperazine.

A term "C₆-C₁₀ aryl group" used herein refers to an aryl group having an aromatic ring including 6-10 carbon atoms, or preferably, a phenyl group.

A term "n-membered heteroaryl group" used herein refers to a heteroaryl group having m carbon atoms forming an aromatic ring and (n-m) heteroatoms forming an aromatic ring, where the heteroatom is at least one selected from N, O, and S. For example, five-membered to ten-membered heteroaryl groups include, but are not limited to, pyrazine, pyrazole, pyrrole, furan, thiophene, thiazole, and pyridine.

A term "haloalkyl group" used herein refers to an alkyl group having one or more halogen substituents (at most a perhaloalkyl group, that is, each hydrogen atom of the alkyl group is substituted by a halogen atom). For example, a term "C₁-C₆ haloalkyl group" refers to a C₁-C₆ alkyl group having one or more halogen substituents (at most a perhaloalkyl group, that is, each hydrogen atom of the alkyl group is substituted by a halogen atom). For another example, a term "C₁ haloalkyl group" refers to a methyl group having 1, 2, or 3 halogen substituents. Examples of the haloalkyl group include CF₃, C₂F₅, CHF₂, CH₂F, CH₂CF₃, CH₂Cl, and the like.

Herein, number ranges related to the number of substituents, the number of carbon atoms, and the number of ring atoms represent enumerations of all integers within the range, and the range is only used as a simplified representation. For example, "1-4 substituents" represent 1, 2, 3, or 4 substituents; and "3-8 carbon atoms" represent 3, 4, 5, 6, 7, or 8 carbon atoms. Therefore, the number ranges related to the number of substituents, the number of carbon atoms, and the number of ring atoms also cover any one of its sub-ranges, and each sub-range is also construed as being disclosed herein.

According to a first aspect, the present disclosure provides a method of preparing glufosinate represented by formula (I) or its salt or enantiomer, or a mixture of its enantiomers in any ratio, comprising: 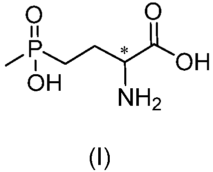 hydrolyzing a compound of formula (III) to generate a compound of formula (I); 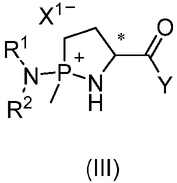 where:
X¹ is halogen;
Y is -OR³ or -N(R⁴)(R⁵);
R¹ and R² are each independently selected from hydrogen, a C₁-C₆ alkyl group, a C₂-C₆ alkenyl group, a C₂-C₆ alkynyl group, a C₃-C₆ cycloalkyl group, a three-membered to six-membered heterocycloalkyl group, a C₆-C₁₀ aryl group, or a five-membered to ten-membered heteroaryl group, or R¹ and R² form a three-membered to six-membered heterocycloalkyl group together with the N atom to which they are attached, where the C₁-C₆ alkyl group, the C₂-C₆ alkenyl group, the C₂-C₆ alkynyl group, the C₃-C₆ cycloalkyl group, the three-membered to six-membered heterocycloalkyl group, the C₆-C₁₀ aryl group, or the five-membered to ten-membered heteroaryl group is optionally substituted by halogen, a carboxyl group, a hydroxyl group, a cyano group, an amino group, a nitro group, a C₁-C₃ alkyl group, a C₁-C₃ haloalkyl group, a C₁-C₃ alkoxy group, a C₃-C₆ cycloalkyl group, or a C₆-C₁₀ aryl group;
R³, R⁴, and R⁵ are each independently selected from hydrogen, a C₁-C₆ alkyl group, a C₂-C₆ alkenyl group, a C₂-C₆ alkynyl group, a C₃-C₆ cycloalkyl group, a three-membered to six-membered heterocycloalkyl group, a C₆-C₁₀ aryl group, or a five-membered to ten-membered heteroaryl group, or R⁴ and R⁵ form a three-membered to six-membered heterocycloalkyl group together with the N atom to which they are attached, where the C₁-C₆ alkyl group, the C₂-C₆ alkenyl group, the C₂-C₆ alkynyl group, the C₃-C₆ cycloalkyl group, the three-membered to six-membered heterocycloalkyl group, the C₆-C₁₀ aryl group, or the five-membered to ten-membered heteroaryl group is optionally substituted by halogen, a carboxyl group, a hydroxyl group, a cyano group, an amino group, a nitro group, a C₁-C₃ alkyl group, a C₁-C₃ haloalkyl group, a C₁-C₃ alkoxy group, a C₃-C₆ cycloalkyl group, or a C₆-C₁₀ aryl group; and
* denotes a chiral carbon atom.

According to the present disclosure, the compound of formula (I) may be present in a form of a single enantiomer. For example, in an embodiment of the present disclosure, the compound of formula (I) may be pure L-glufosinate or D-glufosinate. In addition, the compound of formula (I) may also be present in a form of the mixture of its enantiomers, and each of the enantiomers may be present in any ratio in the mixture of enantiomers. For example, in an embodiment of the present disclosure, the mixture of enantiomers in any ratio of the compound of formula (I) includes L-glufosinate and D-glufosinate in a ratio of 0.1:99.9 to 99.9:0.1. However, because only L-glufosinate is active, the L-enantiomer of the compound of formula (I) in the present disclosure may be preferably present in a greater ratio in the mixture of enantiomers. For example, in an embodiment, the mixture of enantiomers in any ratio of the compound of formula (I) includes L-glufosinate and D-glufosinate in a ratio of 50: 50 to 99.9: 0.1 (for example, 60: 40, 70: 30, 80: 20, 90: 10, 95: 5, or 99: 1).

In the preparation method in the first aspect of the present disclosure, the compound of formula (III) can be hydrolyzed directly in a neutral condition, that is, a hydrolysis reaction can be performed directly in presence of water. In addition, the hydrolysis can also preferably be performed in presence of an acid or an alkali. More specifically, the acids may be at least one selected from hydrochloric acid, sulfuric acid, hydrobromic acid, hydroiodic acid, phosphoric acid, nitric acid, formic acid, and acetic acid, and is preferably hydrochloric acid or sulfuric acid; and the alkali can be selected from hydroxide, carbonate, bicarbonate, or basic carbonate of alkali metal or alkaline earth metal, ammonia, organic alkali, or organic amine, and is preferably sodium hydroxide or triethylamine. In addition, in an embodiment of the present disclosure, the hydrolysis can be performed, for example, at a temperature of 30°C to 140°C (for example, 40°C, 50°C, 60°C, 70°C, 80°C, 90°C, 100°C, 110°C, 120°C, or 130°C) or preferably 70°C to 110°C.

As a preferable solution of the compound of formula (III), R¹, R², R³, R⁴, and R⁵ may be each independently selected from hydrogen, a C₁-C₆ alkyl group, or a C₃-C₆ cycloalkyl group, and is preferably hydrogen, a methyl group, an ethyl group, a propyl group, an isopropyl group, a butyl group, an isobutyl group, a tert-butyl group, a pentyl group, a hexyl group, a cyclopropyl group, a cyclobutyl group, a cyclopentyl group, or a cyclohexyl group. In addition, in a preferable embodiment, when used herein, halogen may be selected from fluorine, chlorine, or bromine; the C₁-C₆ alkyl group may be selected from a methyl group, an ethyl group, a propyl group, or an isopropyl group; the C₂-C₆ alkenyl group may be selected from a vinyl group, a propenyl group, a 1-butenyl group, a 2-butenyl group, or an isobutenyl group; the C₂-C₆ alkynyl group may be selected from an ethynyl group, a propynyl group, a 1-butynyl group, or 2-butynyl group; the C₃-C₆ cycloalkyl group may be selected from a cyclopropyl group, a cyclobutyl group, a cyclopentyl group, or a cyclohexyl group; the three-membered to six-membered heterocycloalkyl group may be selected from a cyclopropyl group, a cyclobutyl group, a cyclopentyl group, or a cyclohexyl group including at least one heteroatom of N, O, or S; the C₆-C₁₀ aryl group may be selected from a phenyl group or a naphthyl group; and/or the five-membered to ten-membered heteroaryl group may be selected from a pyrazinyl group, a pyrazolyl group, a pyrrolyl group, a furyl group, a thienyl group, a thiazolyl group, or a pyridyl group.

As an alternative solution to the compound of formula (III), R¹, R², R³, R⁴, and R⁵ may be each independently selected from -Si(R⁶)(R⁷)(R⁸), and R⁶, R⁷, and R⁸ are each independently selected from hydrogen, a C₁-C₆ alkyl group, a C₂-C₆ alkenyl group, a C₂-C₆ alkynyl group, a C₃-C₆ cycloalkyl group, a three-membered to six-membered heterocycloalkyl group, a C₆-C₁₀ aryl group, or a five-membered to ten-membered heteroaryl group, where the C₁-C₆ alkyl group, the C₂-C₆ alkenyl group, the C₂-C₆ alkynyl group, the C₃-C₆ cycloalkyl group, the three-membered to six-membered heterocycloalkyl group, the C₆-C₁₀ aryl group, or the five-membered to ten-membered heteroaryl group is optionally substituted by halogen, a carboxyl group, a hydroxyl group, a cyano group, an amino group, a nitro group, a C₁-C₃ alkyl group, a C₁-C₃ haloalkyl group, a C₁-C₃ alkoxy group, a C₃-C₆ cycloalkyl group, or a C₆-C₁₀ aryl group.

Further, the preparation method in the first aspect of the present disclosure may further include a step of preparing the compound of formula (III).

In an embodiment of the present disclosure, the compound of formula (III) is prepared by subjecting a compound of formula (II) 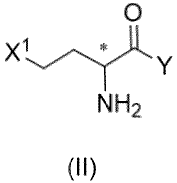 to a reaction with any one of the following compounds or mixtures: a compound of formula (IV); a compound of formula (V); a compound of formula (IV) and a compound of formula (V); a compound of formula (IV) and a compound of formula (VII); a compound of formula (V) and a compound of formula (VII); or a compound of formula (IV), a compound of formula (V), and a compound of formula (VII); 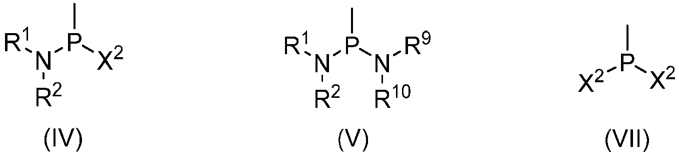 where:
X² is halogen;
R¹, R², X¹, Y, and * are as defined above; and
R⁹ and R¹⁰ are each independently selected from hydrogen, a C₁-C₆ alkyl group, a C₂-C₆ alkenyl group, a C₂-C₆ alkynyl group, a C₃-C₆ cycloalkyl group, a three-membered to six-membered heterocycloalkyl group, a C₆-C₁₀ aryl group, or a five-membered to ten-membered heteroaryl group, or R⁹ and R¹⁰ form a three-membered to six-membered heterocycloalkyl group together with the N atom to which they are attached, where the C₁-C₆ alkyl group, the C₂-C₆ alkenyl group, the C₂-C₆ alkynyl group, the C₃-C₆ cycloalkyl group, the three-membered to six-membered heterocycloalkyl group, the C₆-C₁₀ aryl group, or the five-membered to ten-membered heteroaryl group is optionally substituted by halogen, a carboxyl group, a hydroxyl group, a cyano group, an amino group, a nitro group, a C₁-C₃ alkyl group, a C₁-C₃ haloalkyl group, a C₁-C₃ alkoxy group, a C₃-C₆ cycloalkyl group, or a C₆-C₁₀ aryl group.

In the step of preparing the compound of formula (III) described above, the compound of formula (IV), the compound of formula (V), and/or the compound of formula (VII) used can be added to a reaction system as initial reactants, or can also be obtained by in situ reaction of another compound. For example, the compound of formula (IV) can be obtained by the in-situ reaction of the compound of formula (VII) and the compound NHR¹R² of formula (VIII), or obtained by the in-situ reaction of the compound of formula (V) and the compound of formula (VII); and the compound of formula (V) (herein, R⁹ and R¹⁰ can correspond to R¹ and R², respectively) can be obtained by the in-situ reaction of the compound of formula (VII) and the compound of formula (VIII). As an alternative solution for preparing the compound of formula (III), the compound of formula (III) can also be obtained by subjecting the compound of formula (II) to a reaction with the compound of formula (VII) and the compound of formula (VIII). Further, in the foregoing various steps for preparing the compound of formula (III), there is no limitation on a feeding order of various raw materials, that is, the various raw materials can be fed into the reaction system in any order.

According to the present disclosure, the foregoing steps for preparing the compound of formula (III) can preferably be performed in presence of a deacid reagent. Specifically, the deacid reagent may be selected from NR¹¹R¹²R¹³, where R¹¹, R¹², and R¹³ are each independently selected from hydrogen, a C₁-C₆ alkyl group, a C₂-C₆ alkenyl group, a C₂-C₆ alkynyl group, a C₃-C₆ cycloalkyl group, a three-membered to six-membered heterocycloalkyl group, a C₆-C₁₀ aryl group, or a five-membered to ten-membered heteroaryl group, or any two of R¹¹, R¹², and R¹³ form a three-membered to six-membered heterocycloalkyl group together with the N atom to which they are attached, where the C₁-C₆ alkyl group, the C₂-C₆ alkenyl group, the C₂-C₆ alkynyl group, the C₃-C₆ cycloalkyl group, the three-membered to six-membered heterocycloalkyl group, the C₆-C₁₀ aryl group, or the five-membered to ten-membered heteroaryl group is optionally substituted by halogen, a carboxyl group, a hydroxyl group, a cyano group, an amino group, a nitro group, a C₁-C₃ alkyl group, a C₁-C₃ haloalkyl group, a C₁-C₃ alkoxy group, a C₃-C₆ cycloalkyl group, or a C₆-C₁₀ aryl group.

In addition, since the compound NHR¹R² of the formula (VIII) conforms to a general formula of the foregoing deacid reagent, that is, the compound NHR¹R² meets a requirement for acting as the deacid reagent, an excess of the compound of the formula (VIII) can be added as a deacid reagent that is preferably present in the reaction. In a preferred embodiment of the present disclosure, the deacid reagent may be at least one selected from excesses of the compound of formula (VIII), ammonia, triethylamine, morpholine, and piperidine.

Further, the foregoing step for preparing the compound of formula (III) can be performed in absence of a solvent or in presence of an organic solvent. In an embodiment of the present disclosure, the organic solvent is selected from aromatic hydrocarbon solvents (for example, benzene, xylene, trimethylbenzene, ethylbenzene, diethylbenzene, cumene, diisopropylbenzene, halogenated benzene, or dihalobenzene), alkane solvents (for example, n-hexane, cyclohexane, n-heptane, methylcyclohexane, or ethylcyclohexane), halogenated hydrocarbon solvents (for example, dichloromethane, dichloroethane, chloroform, or carbon tetrachloride), ether solvents (for example, tetrahydrofuran, methyl tetrahydrofuran, methyl tert-butyl ether, diisopropyl ether, methyl cyclopentyl ether, ethylene glycol dimethyl ether, dioxygen hexacyclic, or diglyme), ester solvents (for example, ethyl acetate, isopropyl acetate, or butyl acetate), amide solvents (for example, N,N-dimethylformamide, N,N-dimethylacetamide, hexamethylphosphoric triamide, N-methylpyrrolidone, or 1,3-dimethyl-2-imidazolinone), or sulfur-containing solvents (for example, dimethylsulfoxide or sulfolane). Preferably, the organic solvent is at least of selected from toluene and chlorobenzene.

Consumption of each reactant and reaction conditions in the foregoing step for preparing the compound of formula (III) can be adjusted based on an actual need and knowledge of a person skilled in the art. In an embodiment of the present disclosure, a molar ratio among the compound of formula (II), total usage of the compounds of formulas (IV), (V) and (VII), and the deacid reagent may be 1: (0.9-5): (0.9-5), or preferably 1: (1.05-1.5): (1.05-1.5). In another embodiment of the present disclosure, the reaction may be performed at a temperature of -20°C to 10°C (for example, -10°C, -5°C, 0°C, or 5°C) for 1 to 15 hours (for example, 2h, 4h, 6h, or 12h), and then at 10°C to 120°C (for example, 20°C, 40°C, 60°C, 80°C, or 100°C) for 0.5 to 24 hours (for example, 1h, 2h, 4h, 6h, 12h, or 18h).

As an alternative solution for preparing the compound of formula (III), the compound of formula (III) may be further prepared in a method including steps of:
a) subjecting a compound of formula (II) to a reaction with any one of the following compounds or mixtures: a compound of formula (IV); a compound of formula (V); a compound of formula (IV) and a compound of formula (V); a compound of formula (IV) and a compound of formula (VII); a compound of formula (V) and a compound of formula (VII); or a compound of formula (IV), a compound of formula (V), and a compound of formula (VII); 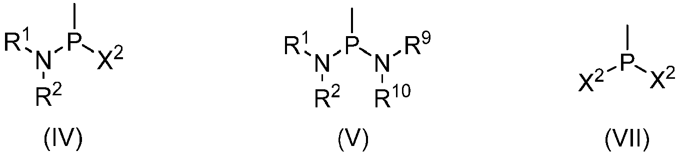 to obtain the compound of formula (VI); 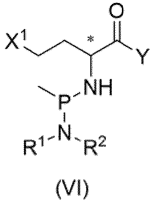 and,
b) preparing the compound of formula (III) via a reaction with the compound of formula (VI);
where X¹, X², Y, R¹, R², R⁹, R¹⁰, and * are as defined above.

In the alternative solution, a reaction raw material is basically the same as that in the foregoing solution except that it is clarified that the compound of formula (VI) obtained is used as an intermediate for a subsequent reaction. Therefore, for selection of the reaction raw material, the reaction system, reaction conditions, and the like in the alternative solution, refer to the foregoing solution for preparing the compound of formula (III). Details are not described herein again to avoid unnecessary redundancy. Taking the reaction condition as an example for description, the reaction in step a) may be performed at a temperature of -20°C to 10°C for 1 to 15 hours; and the reaction in step b) is performed at a temperature of 10°C to 120°C for 0.5 to 24 hours.

According to a second aspect, the present disclosure provides a method of preparing glufosinate represented by formula (I) or its salt or enantiomer, or a mixture of its enantiomers in any ratio, including steps of: 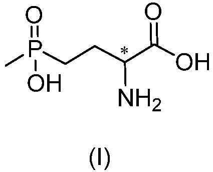 in absence of a solvent or in presence of an organic solvent, subjecting a compound of formula (II) 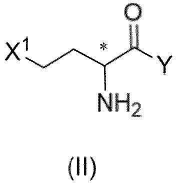 to a reaction with any one of the following compounds or mixtures: a compound of formula (IV), a compound of formula (V), a compound of formula (IV) and a compound of formula (V), a compound of formula (IV) and a compound of formula (VII), a compound of formula (V) and a compound of formula (VII), or a compound of formula (IV), a compound of formula (V) and a compound of formula (VII), to obtain an intermediate; 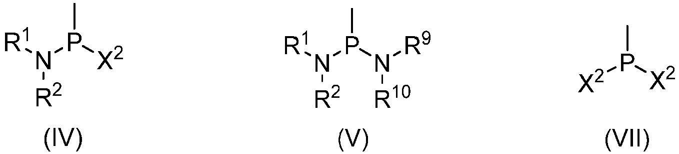 and hydrolyzing the intermediate under an acidic, neutral, or alkaline condition, to obtain a compound of formula (I);
where X¹, X², Y, R¹, R², R⁹, R¹⁰, and * are as defined above.

For the organic solvent, the hydrolysis condition, and the like in the preparation method in the second aspect of the present disclosure, refer to the first aspect of the present disclosure. Details are not described herein again to avoid unnecessary redundancy.

According to a third aspect, the present disclosure provides a compound of formula (III) or its salt or enantiomer, or a mixture of its enantiomers in any ratio; 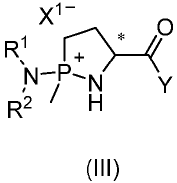 where X¹, Y, R¹, R², and * are as defined above.

Preferably, the compound of formula (III) can be prepared with reference to the first aspect of the present disclosure.

According to a fourth aspect, the present disclosure provides a method of preparing a compound of formula (III) or its salt or enantiomer, or a mixture of its enantiomers in any ratio, including a step of: 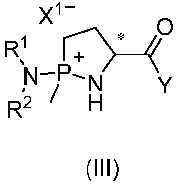 subjecting a compound of formula (II) 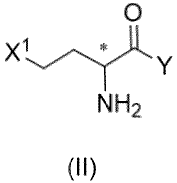 to a reaction with any one of the following compounds or mixtures: a compound of formula (IV); a compound of formula (V); a compound of formula (IV) and a compound of formula (V); a compound of formula (IV) and a compound of formula (VII); a compound of formula (V) and a compound of formula (VII); or a compound of formula (IV), a compound of formula (V), and a compound of formula (VII); 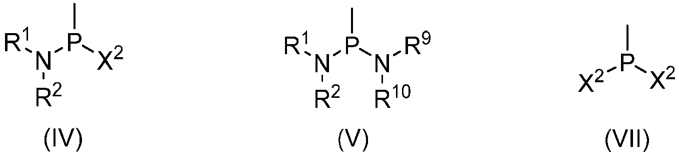 where X¹, X², Y, R¹, R², R⁹, R¹⁰, and * are as defined above.

According to a fifth aspect, the present disclosure provides a method of preparing a compound of formula (III) or its salt or enantiomer, or a mixture of its enantiomers in any ratio, 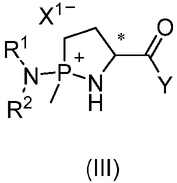 and the method includes preparing the compound of formula (III) from a reaction with the compound of formula (VI), 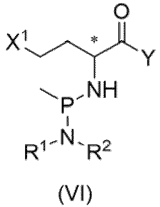 where X¹, Y, R¹, R², and * are as defined above.

According to a sixth aspect, the present disclosure provides a compound of formula (VI) or its salt or enantiomer, or a mixture of its enantiomers in any ratio; 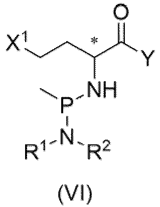 where X¹, Y, R¹, R², and * are as defined above.

Preferably, the compound of formula (VI) can be prepared with reference to the first aspect of the present disclosure.

According to a seventh aspect, the present disclosure provides a method of preparing a compound of formula (VI) or its salt or enantiomer, or a mixture of its enantiomers in any ratio, 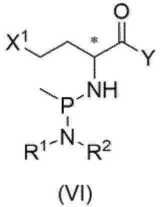 and the method includes subjecting a compound of formula (II) 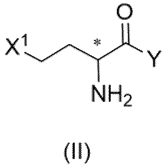 to a reaction with any one of the following compounds or mixtures: a compound of formula (IV); a compound of formula (V); a compound of formula (IV) and a compound of formula (V); a compound of formula (IV) and a compound of formula (VII); a compound of formula (V) and a compound of formula (VII); or a compound of formula (IV), a compound of formula (V), and a compound of formula (VII); 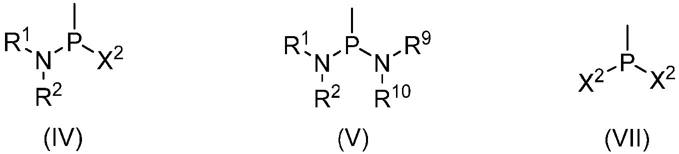 where X¹, X², Y, R¹, R², R⁹, R¹⁰, and * are as defined above.

According to an eighth aspect, the present disclosure provides a method of preparing a compound of formula (VI) or its salt or enantiomer, or a mixture of its enantiomers in any ratio, 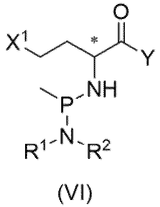 and the method includes subjecting a compound of formula (II) to a reaction with a compound of formula (VII) and a compound of formula (VIII); 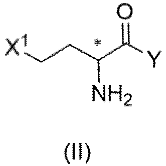 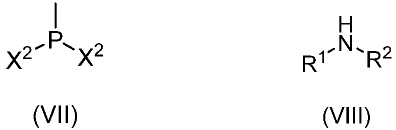 where X¹, X², Y, R¹, R², and * are as defined above.

According to a ninth aspect, the present disclosure provides a composition including a compound of formula (IV) and a compound of formula (V); a compound of formula (IV) and a compound of formula (VII); or a compound of formula (IV), a compound of formula (V), and a compound of formula (VII); 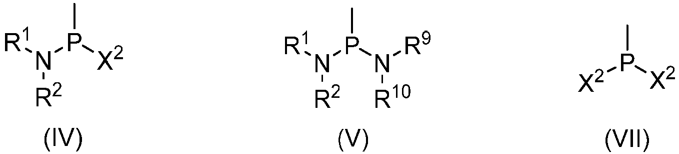 where X², R¹, R², R⁹, R¹⁰, and * are as defined above.

According to a tenth aspect, the present disclosure provides use of the composition in the ninth aspect in preparation of glufosinate represented by formula (I) or its salt or enantiomer, or a mixture of its enantiomers in any ratio:

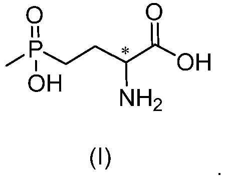

A person skilled in the art can understand that a definition and a preferred item described in one aspect of the present disclosure are also applicable to other aspects. A person skilled in the art can understand that the embodiments of various aspects of the present disclosure can be combined in various manners without departing from the subject and concept of the present disclosure, and these combinations also fall within the scope of the present disclosure.

Compared with the prior art, the present disclosure at least has advantageous effects in that:
1. Due to the distinctive reaction mechanism, the halogenated hydrocarbon by-product in the Michaelis-Arbuzov reaction can be avoided. The halogenated hydrocarbon by-product is usually ethyl chloride and methyl chloride, both of which are Class III carcinogens and have a destructive effect on ozone in the aerosphere. Accordingly, the equipment and engineering investments required for the separation, purification, and collection of the foregoing by-products are eliminated, and the potential environmental and safety hazards brought by the foregoing by-products are also avoided.
2. The reaction is milder than the Michaelis-Arbuzov reaction, and reaction temperature can be reduced by 30°C to 80°C compared with that in the Michaelis-Arbuzov reaction, and by virtue of this, racemization of the L configuration at high temperature can also be reduced when L-glufosinate is prepared, thereby improving purity of the L configuration product.
3. The source of the raw material is simplified, and methyldichlorophosphine is directly used as the raw material without using methyl phosphite diester as the intermediate, which reduces the cost of the raw material.

### DETAILED DESCRIPTION

The present disclosure is further described below with reference to examples, but these examples are not intended to limit the scope of the present disclosure. Unless otherwise stated, all reactants used in the examples are commercially available; and instruments and devices used in synthesis experiments and product analyses and detection are all conventional instruments and devices commonly used in organic syntheses.

### Example 1: Synthesis of L-glufosinate hydrochloride (I-1)

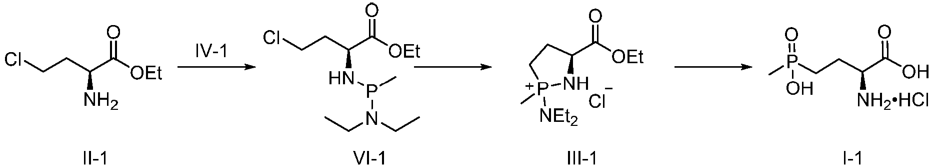

### (1) Synthesis of compound (IV-1)

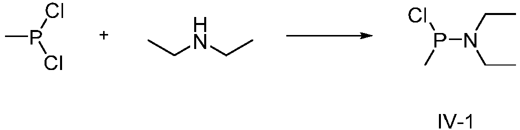

Diethylamine (26.28g, 0.359mol, 2.1eq.) was added into 100g of toluene, the mixture was cooled to -5°C to 5°C in a nitrogen atmosphere, and methyldichlorophosphine (20g, 0.171mol, 1.0eq.) was then added dropwise with the temperature of the mixture maintained at -5°C to 5°C. After the addition was completed, compound (IV-1) was obtained and directly used for the next reaction after 0.5 hour of reaction at a constant temperature.

m/z (ESI) 154.08 ([M+1]⁺, 100%); ³¹P NMR (33 MHz) δ: 144.57.

### (2) Synthesis of compound (VI-1)

In a nitrogen atmosphere, the compound (II-1) (26.92g, 0.163mol, 0.95eq.) and diethylamine (11.89g, 0.163mol, 0.95eq.) was added successively into 50g of toluene. After stirring evenly, the above compound (IV-1) was added dropwise under ice bath cooling. The inner temperature of the reaction solution was controlled at 5 to 10°C, and the reaction was held for 2 hours after the dropwise addition was completed. Nitrogen pressure filtration was performed, and the filter cake was washed twice with toluene. The combined filtrate was the solution of compound (VI-1), which can be directly used for the next reaction.

m/z (ESI) 283.11 ([M+1]⁺, 100%).

### (3) Synthesis of compound (III-1)

In a nitrogen atmosphere, the above compound (VI-1) solution was slowly heated to 80 to 85°C for 10 hours to obtain a solution of compound (III-1), which can be directly used for the next reaction.

m/z (ESI) 247.18 ([M-Cl]⁺, 100%); ³¹P NMR (33 MHz) δ: 71.40.

### (4) Synthesis of compound (I-1)

Added 150g of 30% hydrochloric acid into the above compound (III-1) solution and heated it to 95 to 105°C for reaction. After the reaction was completed, the resulting mixture was distilled under reduced pressure, and then 150g of absolute ethanol was added, the mixture was briefly boiled and cooled to crystallize, filtered and dried to obtain a white crystal, namely, 30.1g of the target product (I-1), yield: 83.5%, assay: 98.1%, and 97.3% ee value.
m/z (ESI) 182.07 ([M+1]⁺, 100%);
³¹P NMR (243 MHz, D₂O) δ: 53.67;
¹H NMR (600 MHz, D₂O) δ: 4.10 (t, J = 6.1 Hz, 1H), 2.25 - 2.05 (m, 2H), 1.99 - 1.75 (m, 2H), 1.47 (d, J = 14.1 Hz, 3H);
¹³C NMR (151 MHz, D₂O) δ: 171.29, 52.96 (d, J = 16.6 Hz), 25.25 (d, J = 93.0 Hz), 22.72 (d, J = 2.6 Hz), 13.61 (d, J = 92.5 Hz).

### Example 2: Synthesis of L-glufosinate hydrochloride (I-1)

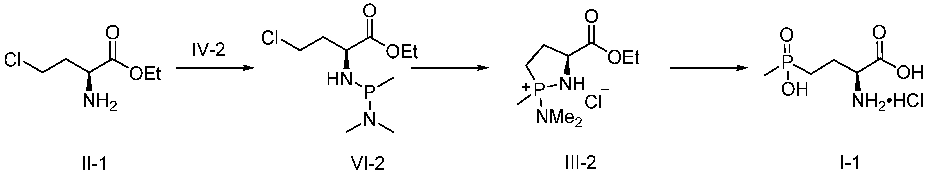

### (1) Synthesis of compound (IV-2)

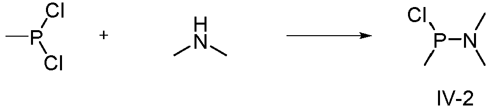

Slowly added dimethylamine (16.20g, 0.360mol, 2.1eq.) into 100g of pre cooled toluene to -5°C to 5°C in a nitrogen atmosphere, and then methyldichlorophosphine (20g, 0.171mol, 1.0eq.) was added dropwise with the temperature of the mixture maintained at -5°C to 5°C. After the dropwise addition was completed, compound (IV-2) was obtained and directly used for the next reaction after 0.5 hour of reaction at a constant temperature.

m/z (ESI) 126.04 ([M+1]⁺, 100%); ³¹P NMR (33 MHz) δ: 150.61.

### (2) Synthesis of compound (VI-2)

In a nitrogen atmosphere, the compound (II-1) (27.20g, 0.164mol, 0.96eq.) was added into 50g of toluene. Dimethylamine (7.41g, 0.164mol, 0.96eq.) was slowly added under ice bath cooling, and the inner temperature of the reaction solution was controlled at 5°C to 10°C, then the above compound (IV-2) solution was added dropwise. The reaction was held for 2 hours after the dropwise addition was completed. Nitrogen pressure filtration was performed, and the filter cake was washed twice with toluene. The combined filtrate was the solution of compound (VI-2), which can be directly used for the next reaction.

m/z (ESI) 255.12 ([M+1]⁺, 100%).

### (3) Synthesis of compound (III-2)

In a nitrogen atmosphere, the above compound (VI-2) solution was slowly heated to 80°C to 85°C for 7 hours to obtain a solution of compound (III-2), which can be directly used for the next reaction.

m/z (ESI) 219.14 ([M-Cl]⁺, 100%); ³¹P NMR (33 MHz) δ: 78.20.

### (4) Synthesis of compound (I-1)

Added 150g of 30% hydrochloric acid into the above compound (III-2) solution and heated it to 95°C to 105°C for reaction. After the reaction was completed, the resulting mixture was distilled under reduced pressure, and then 150g of absolute ethanol was added, the mixture was briefly boiled and cooled to crystallize, filtered and dried to obtain a white crystal, namely, 28.7g of the target product (I-1), yield: 78.5%, assay: 97.6%, and 95.3% ee value.

### Example 3: Synthesis of L-glufosinate hydrochloride (I-1)

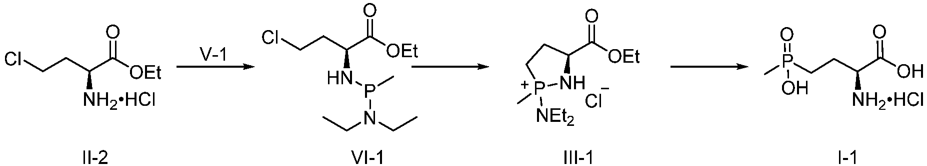

### (1) Synthesis of compound (V-1)

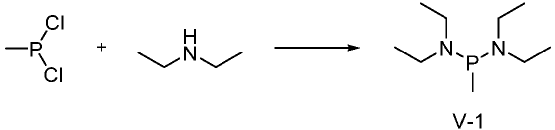

Diethylamine (51.30g, 0.701mol, 4.1eq.) was added into 150g of toluene, the mixture was cooled to -5°C to 5°C in a nitrogen atmosphere, and methyldichlorophosphine (20g, 0.171mol, 1.0eq.) was then added dropwise with the temperature of the mixture maintained at -5°C to 5°C. After the dropwise addition was completed, compound (V-1) was obtained and directly used for the next reaction after 0.5 hour of reaction at a constant temperature.

m/z (ESI) 191.17 ([M+1]⁺, 100%); ³¹P NMR (33 MHz) δ: 79.29.

### (2) Synthesis of compound (VI-1)

In a nitrogen atmosphere, the compound (II-2) (32.84g, 0.163mol, 0.95eq.) was added into 50g of toluene, and the above compound (V-1) was added dropwise under ice bath cooling. The inner temperature of the reaction solution was controlled at 5°C to 10°C. The reaction was held for 2 hours after the dripping was completed. Nitrogen pressure filtration was performed, and the filter cake was washed twice with toluene. The combined filtrate was the solution of compound (VI-1), which can be directly used for the next reaction.

m/z (ESI) 283.13 ([M+1]⁺, 100%).

### (3) Synthesis of compound (III-1)

In a nitrogen atmosphere, the above compound (VI-1) solution was slowly heated to 80 to 85°C for 10 hours to obtain a solution of compound (III-1), which can be directly used for the next reaction.

m/z (ESI) 247.17 ([M-Cl]⁺, 100%); ³¹P NMR (33 MHz) δ: 71.10.

### (4) Synthesis of compound (I-1)

Added 150g of 30% hydrochloric acid into the above compound (III-1) solution and heated it to 95°C to 105°C for reaction. After the reaction was completed, the resulting mixture was distilled under reduced pressure, and then 150g of absolute ethanol was added, the mixture was briefly boiled and cooled to crystallize, filtered and dried to obtain a white crystal, namely, 26.7g of the target product (I-1), yield: 73.5%, assay: 97.5%, and 97.5% ee value.

### Example 4: Synthesis of L-glufosinate hydrochloride (I-1)

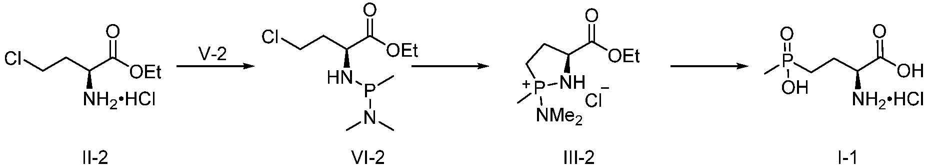

### (1) Synthesis of compound (V-2)

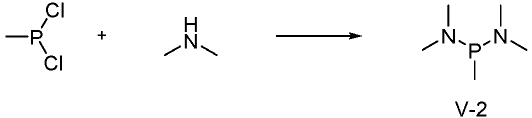

Slowly added dimethylamine (31.63g, 0.701mol, 4.1eq.) into 150g of toluene while lowering the temperature to -5°C to 5°C under nitrogen protection. methyldichlorophosphine (20g, 0.171mol, 1.0eq.) was added dropwise while maintaining the system temperature at -5°C to 5°C. After the dropwise addition was completed, compound (V-2) was obtained and directly used for the next reaction after 0.5 hour of reaction at a constant temperature.

m/z (ESI) 135.09 ([M+1]⁺, 100%); ³¹P NMR (33 MHz) δ: 87.63.

### (2) Synthesis of compound (VI-2)

In a nitrogen atmosphere, the compound (II-2) (32.84g, 0.163mol, 0.95eq.) was added into 50g of toluene, and the above compound (V-2) was added dropwise under ice bath cooling. The inner temperature of the reaction solution was controlled at 5°C to 10°C. The reaction was held for 2 hours after the dropwise addition was completed. Nitrogen pressure filtration was performed, and the filter cake was washed twice with toluene. The combined filtrate was the solution of compound (VI-2), which can be directly used for the next reaction.

m/z (ESI) 255.11 ([M+1]⁺, 100%).

### (3) Synthesis of compound (III-2)

In a nitrogen atmosphere, the above compound (VI-2) solution was slowly heated to 80°C to 85°C for 8 hours to obtain a solution of compound (III-2), which can be directly used for the next reaction.

m/z (ESI) 219.12 ([M-Cl]⁺, 100%); ³¹P NMR (33 MHz) δ: 77.90.

### (4) Synthesis of compound (I-1)

Added 150g of 30% hydrochloric acid into the above compound (III-2) solution and heated it to 95°C to 105°C for reaction. After the reaction was completed, the resulting mixture was distilled under reduced pressure, and then 150g of absolute ethanol was added, the mixture was briefly boiled and cooled to crystallize, filtered and dried to obtain a white crystal, namely, 25.9g of the target product (I-1), yield: 70.5%, assay: 96.2%, and 97.3% ee value.

### Example 5: Synthesis of DL-glufosinate hydrochloride (I-2)

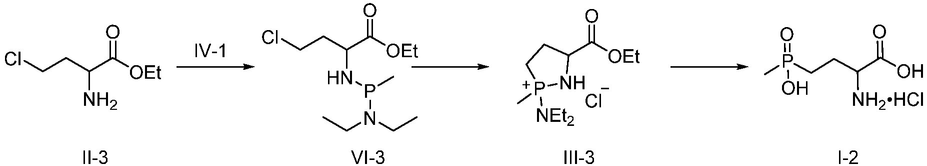

### (1) Synthesis of compound (IV-1)

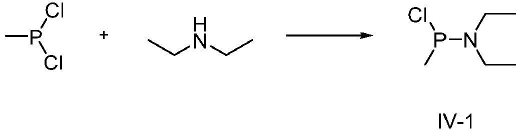

Diethylamine (27.53g, 0.376mol, 2.2eq.) was added into 100g of toluene, the mixture was cooled to -5°C to 5°C in a nitrogen atmosphere, and methyldichlorophosphine (20g, 0.171mol, 1.0eq.) was then added dropwise with the temperature of the mixture maintained at -5°C to 5°C. After the addition was completed, compound (IV-1) was obtained and directly used for the next reaction after 0.5 hour of reaction at a constant temperature.

### (2) Synthesis of compound (VI-3)

In a nitrogen atmosphere, the compound (II-3) (27.77g, 0.168mol, 0.98eq.) and diethylamine (12.26g, 0.168mol, 0.98eq.) was added successively into 50g of toluene. After stirring evenly, the above compound (IV-1) was added dropwise under ice bath cooling. The inner temperature of the reaction solution was controlled at 5°C to 10°C, and the reaction was held for 2 hours after the addition was completed. Nitrogen pressure filtration was performed, and the filter cake was washed twice with toluene. The combined filtrate was the solution of compound (VI-3), which can be directly used for the next reaction.

### (3) Synthesis of compound (III-3)

In a nitrogen atmosphere, the above compound (VI-3) solution was slowly heated to 80°C to 85°C for 10 hours to obtain a solution of compound (III-3), which can be directly used for the next reaction.

### (4) Synthesis of compound (I-2)

Added 150g of 30% hydrochloric acid into the above compound (III-3) solution and heated it to 95 to 105°C for reaction. After the reaction was completed, the resulting mixture was distilled under reduced pressure, and then 150g of absolute ethanol was added, the mixture was briefly boiled and cooled to crystallize, filtered and dried to obtain a white crystal, namely, 30.2g of the target product (I-2), yield: 81.5%, assay: 98.5%.

### Example 6: Synthesis of DL-glufosinate hydrochloride (I-2)

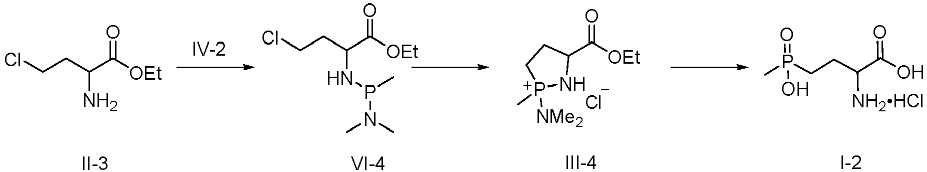

### (1) Synthesis of compound (IV-2)

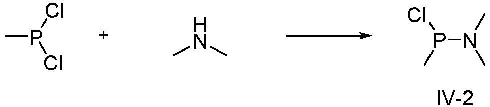

Slowly added dimethylamine (16.20g, 0.359mol, 2.1eq.) into 100g of toluene while lowering the temperature to -5 to 5°C under nitrogen protection. methyldichlorophosphine (20g, 0.171mol, 1.0eq.) was added dropwise while maintaining the system temperature at -5 to 5°C. After the addition was completed, compound (IV-2) was obtained and directly used for the next reaction after 0.5 hour of reaction at a constant temperature.

### (2) Synthesis of compound (VI-4)

In a nitrogen atmosphere, the compound (II-3) (27.48g, 0.166mol, 0.97eq.) was added into 50g of toluene, then dimethylamine (7.48g, 0.166mol, 0.97eq.) was slowly added under ice bath cooling, the inner temperature of the reaction solution was controlled at 5°C to 10°C, then the above compound (IV-2) solution was added dropwise. The reaction was held for 2 hours after the dripping was completed. Nitrogen pressure filtration was performed, and the filter cake was washed twice with toluene. The combined filtrate was the solution of compound (VI-4), which can be directly used for the next reaction.

### (3) Synthesis of compound (III-4)

In a nitrogen atmosphere, the above compound (VI-4) solution was slowly heated to 80°C to 85°C for 6 hours to obtain a solution of compound (III-4), which can be directly used for the next reaction.

### (4) Synthesis of compound (I-2)

Added 150g of 30% hydrochloric acid into the above compound (III-4) solution and heated it to 95°C to 105°C for reaction. After the reaction was completed, the resulting mixture was distilled under reduced pressure, and then 150g of absolute ethanol was added, the mixture was briefly boiled and cooled to crystallize, filtered and dried to obtain a white crystal, namely, 28.9g of the target product (I-2), yield: 77.5%, assay: 96.8%.

### Example 7: Synthesis of DL-glufosinate hydrochloride (I-2)

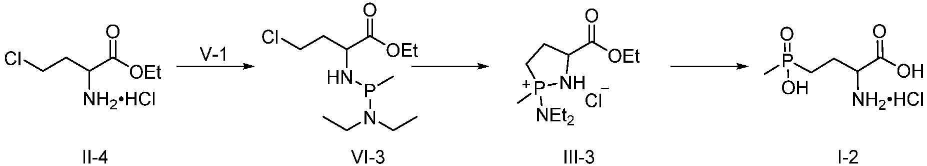

### (1) Synthesis of compound (V-1)

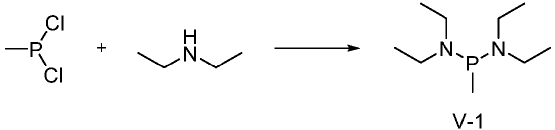

Diethylamine (52.55g, 0.719mol, 4.2eq.) was added into 150g of toluene, the mixture was cooled to -5°C to 5°C in a nitrogen atmosphere, and methyldichlorophosphine (20g, 0.171mol, 1.0eq.) was then added dropwise with the temperature of the mixture maintained at -5°C to 5°C. After the addition was completed, compound (V-1) was obtained and directly used for the next reaction after 0.5 hour of reaction at a constant temperature.

### (2) Synthesis of compound (VI-3)

In a nitrogen atmosphere, the compound (II-4) (32.84g, 0.163mol, 0.95eq.) was added into 50g of toluene, and the above compound (V-1) was added dropwise under ice bath cooling. The inner temperature of the reaction solution was controlled at 5°C to 10°C. The reaction was held for 2 hours after the addition was completed. Nitrogen pressure filtration was performed, and the filter cake was washed twice with toluene. The combined filtrate was the solution of compound (VI-3), which can be directly used for the next reaction.

### (3) Synthesis of compound (III-3)

In a nitrogen atmosphere, the above compound (VI-3) solution was slowly heated to 80 to 85°C for 10 hours to obtain a solution of compound (III-3), which can be directly used for the next reaction.

### (4) Synthesis of compound (I-2)

Added 150g of 30% hydrochloric acid into the above compound (III-3) solution and heated it to 95°C to 105°C for reaction. After the reaction was completed, the resulting mixture was distilled under reduced pressure, and then 150g of absolute ethanol was added, the mixture was briefly boiled and cooled to crystallize, filtered and dried to obtain a white crystal, namely, 25.7g of the target product (I-2), yield: 71.1%, assay: 97.8%.

### Example 8: Synthesis of DL-glufosinate hydrochloride (I-2)

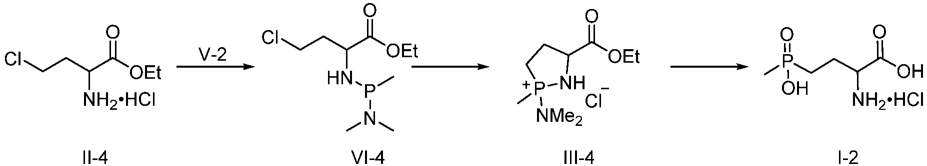

### (1) Synthesis of compound (V-2)

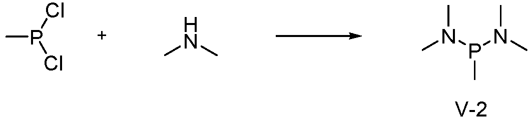

Dimethylamine (31.24g, 0.693mol, 4.05eq.) was slowly added into 150g of toluene, the mixture was cooled to -5°C to 5°C in a nitrogen atmosphere, and methyldichlorophosphine (20g, 0.171mol, 1.0eq.) was then added dropwise with the temperature of the mixture maintained at -5°C to 5°C. After the addition was completed, compound (V-2) was obtained and directly used for the next reaction after 0.5 hour of reaction at a constant temperature.

### (2) Synthesis of compound (VI-4)

In a nitrogen atmosphere, the compound (II-4) (32.84g, 0.163mol, 0.95eq.) was added into 50g of toluene, and the above compound (V-2) was added dropwise under ice bath cooling. The inner temperature of the reaction solution was controlled at 5°C to 10°C. The reaction was held for 2 hours after the dropwise addition was completed. Nitrogen pressure filtration was performed, and the filter cake was washed twice with toluene. The combined filtrate was the solution of compound (VI-4), which can be directly used for the next reaction.

### (3) Synthesis of compound (III-4)

In a nitrogen atmosphere, the above compound (VI-4) solution was slowly heated to 80°C to 85°C for 8 hours to obtain a solution of compound (III-4), which can be directly used for the next reaction.

### (4) Synthesis of compound (I-2)

Added 150g of 30% hydrochloric acid into the above compound (III-4) solution and heated it to 95 to 105°C for reaction. After the reaction was completed, the resulting mixture was distilled under reduced pressure, and then 150g of absolute ethanol was added, the mixture was briefly boiled and cooled to crystallize, filtered and dried to obtain a white crystal, namely, 26.4g of the target product (I-2), yield: 72.5%, assay: 97.2%.

### Example 9: Synthesis of L-glufosinate hydrochloride (I-1)

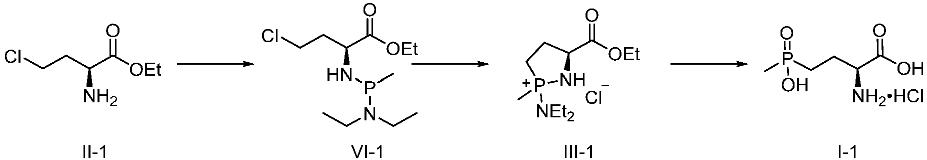

### (1) Synthesis of compound (VI-1)

In a nitrogen atmosphere, the compound (II-1) (40.37g, 0.244mol, 0.95eq.) and diethylamine (57.24g, 0.783mol, 3.05eq.) was added successively into 150g of toluene. After stirring evenly, methyldichlorophosphine (30.0g, 0.257mol, 1.0eq.) was then added dropwise under ice bath cooling. The inner temperature of the reaction solution was controlled at 5 to 10°C. The reaction was held for 2 hours after the dropwise addition was completed, nitrogen pressure filtration was then performed, and the filter cake was washed twice with toluene. The combined filtrate was the solution of compound (VI-1), which can be directly used for the next reaction.

### (2) Synthesis of compound (III-1)

In a nitrogen atmosphere, the above compound (VI-1) solution was slowly heated to 80 to 85°C for 10 hours to obtain a solution of compound (III-1), which can be directly used for the next reaction.

### (3) Synthesis of compound (I-1)

Added 150g of 30% hydrochloric acid into the above compound (III-1) solution and heated it to 95 to 105°C for reaction. After the reaction was completed, the resulting mixture was distilled under reduced pressure, and then 150g of absolute ethanol was added, the mixture was briefly boiled and cooled to crystallize, filtered and dried to obtain a white crystal, namely, 46.0g of the target product (I-1), yield: 85.5%, assay: 98.5%, and 97.5% ee value.

### Example 10: Synthesis of L-glufosinate hydrochloride (I-1)

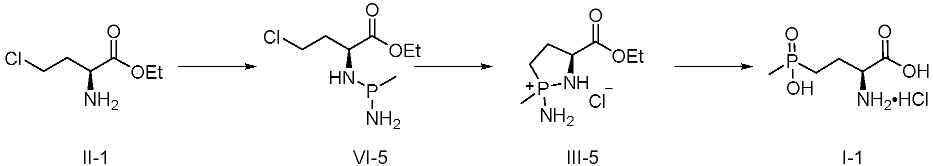

### (1) Synthesis of compound (VI-5)

In a nitrogen atmosphere, the compound (II-1) (33.78g, 0.204mol, 0.95eq.) was added into 150g of toluene. Methyldichlorophosphine (25.1g, 0.215mol, 1.0eq.) was then added dropwise under ice bath cooling, simultaneously ammonia gas (18.46g, 1.084mol, 5.05eq.) was slowly Injected into the mixture. The inner temperature of the reaction solution was controlled at 5°C to 10°C. The reaction was held for 2 hours after the dropwise addition was completed, nitrogen pressure filtration was then performed, and the filter cake was washed twice with toluene. The combined filtrate was the solution of compound (VI-5), which can be directly used for the next reaction.

m/z (ESI) 227.07 ([M+1]⁺, 100%).

### (2) Synthesis of compound (III-5)

In a nitrogen atmosphere, the above compound (VI-5) solution was slowly heated to 60°C to 65°C for 10 hours to obtain a solution of compound (III-5), which can be directly used for the next reaction.

m/z (ESI) 191.11 ([M-Cl]⁺, 100%);

### (3) Synthesis of compound (I-1)

Added 150g of 30% hydrochloric acid into the above compound (III-5) solution and heated it to 95 to 105°C for reaction. After the reaction was completed, the resulting mixture was distilled under reduced pressure, and then 150g of absolute ethanol was added, the mixture was briefly boiled and cooled to crystallize, filtered and dried to obtain a white crystal, namely, 31.5g of the target product (I-1), yield: 69.5%, assay: 97.5%, and 97.2% ee value.

### Example 11: Synthesis of L-glufosinate hydrochloride (I-1)

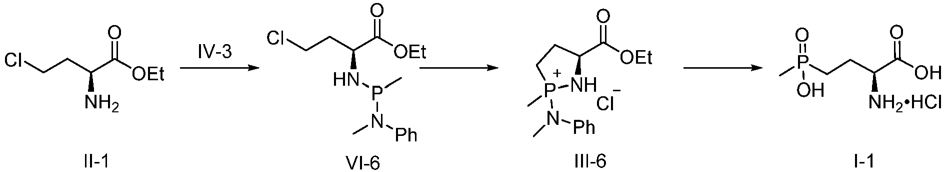

### (1) Synthesis of compound (IV-3)

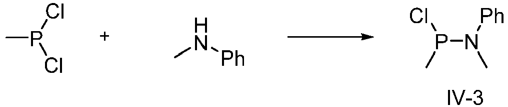

N-methylaniline (50.73g, 0.473mol, 2.05eq.) was dissolved in 100g toluene, and cooled to -5°C to 5°C under inert atmosphere, then methyldichlorophosphine (27g, 0.231mol, 1.0eq.) was added dropwise while maintaining the inner temperature at - 5°C to 5°C. After the addition was completed, the compound (IV-3) was obtained and directly used for the next reaction after 0.5 hour of reaction at a constant temperature.

m/z (CI) 188.05 ([M+1]⁺, 100%); ³¹P NMR (33 MHz) δ: 140.51.

### (2) Synthesis of compound (VI-6)

In a nitrogen atmosphere, the compound (II-1) (37.48g, 0.226mol, 0.98 eq.) was added into 50g of toluene, and N-methylaniline (24.25g, 0.226mol, 0.98eq.) was added. After stirring evenly, the above compound (IV-3) solution was added dropwise under ice bath cooling, the inner temperature of the reaction solution was controlled at 5°C to 10°C. The reaction was held for 5 hours after dropwise addition was completed. Nitrogen pressure filtration was performed, and the filter cake was washed twice with toluene. The combined filtrate was the solution of compound (VI-6), which can be directly used for the next reaction.

m/z (ESI) 317.13 ([M+1]⁺, 100%).

### (3) Synthesis of compound (III-6)

In a nitrogen atmosphere, the above compound (VI-6) solution was slowly heated to 80 to 85°C for 12 hours to obtain a solution of compound (III-6), which can be directly used for the next reaction.

m/z (ESI) 281.15 ([M-Cl]⁺, 100%); ³¹P NMR (33 MHz) δ: 60.31.

### (4) Synthesis of compound (I-1)

Added 150g of 30% hydrochloric acid into the above compound (III-6) solution and heated it to 95 to 105°C for reaction. After the reaction was completed, the resulting mixture was distilled under reduced pressure, and then 150g of absolute ethanol was added, the mixture was briefly boiled and cooled to crystallize, filtered and dried to obtain a white crystal, namely, 36.1g of the target product (I-1), yield: 71.5%, assay: 97.5%, and 96.1% ee value.

## Claims

1. A method of preparing glufosinate represented by formula (I) or its salt or enantiomer, or a mixture of its enantiomers in any ratio, comprising: 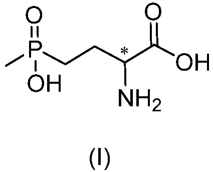 hydrolyzing a compound of formula (III) to generate a compound of formula (I); 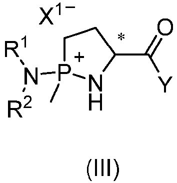 wherein:
X¹ is halogen;
Y is -OR³ or -N(R⁴)(R⁵);
R¹ and R² are each independently selected from hydrogen, a C₁-C₆ alkyl group, a C₂-C₆ alkenyl group, a C₂-C₆ alkynyl group, a C₃-C₆ cycloalkyl group, a three-membered to six-membered heterocycloalkyl group, a C₆-C₁₀ aryl group, or a five-membered to ten-membered heteroaryl group, or R¹ and R² form a three-membered to six-membered heterocycloalkyl group together with the N atom to which they are attached, wherein the C₁-C₆ alkyl group, the C₂-C₆ alkenyl group, the C₂-C₆ alkynyl group, the C₃-C₆ cycloalkyl group, the three-membered to six-membered heterocycloalkyl group, the C₆-C₁₀ aryl group, or the five-membered to ten-membered heteroaryl group is optionally substituted by halogen, a carboxyl group, a hydroxyl group, a cyano group, an amino group, a nitro group, a C₁-C₃ alkyl group, a C₁-C₃ haloalkyl group, a C₁-C₃ alkoxy group, a C₃-C₆ cycloalkyl group, or a C₆-C₁₀ aryl group;
R³, R⁴, and R⁵ are each independently selected from hydrogen, a C₁-C₆ alkyl group, a C₂-C₆ alkenyl group, a C₂-C₆ alkynyl group, a C₃-C₆ cycloalkyl group, a three-membered to six-membered heterocycloalkyl group, a C₆-C₁₀ aryl group, or a five-membered to ten-membered heteroaryl group, or R⁴ and R⁵ form a three-membered to six-membered heterocycloalkyl group together with the N atom to which they are attached, wherein the C₁-C₆ alkyl group, the C₂-C₆ alkenyl group, the C₂-C₆ alkynyl group, the C₃-C₆ cycloalkyl group, the three-membered to six-membered heterocycloalkyl group, the C₆-C₁₀ aryl group, or the five-membered to ten-membered heteroaryl group is optionally substituted by halogen, a carboxyl group, a hydroxyl group, a cyano group, an amino group, a nitro group, a C₁-C₃ alkyl group, a C₁-C₃ haloalkyl group, a C₁-C₃ alkoxy group, a C₃-C₆ cycloalkyl group, or a C₆-C₁₀ aryl group; and
* denotes a chiral carbon atom.

2. The method of claim 1, wherein the hydrolysis is performed in presence of an acid or an alkali.

3. The method of claim 2, wherein the acid is at least one selected from hydrochloric acid, sulfuric acid, hydrobromic acid, hydroiodic acid, phosphoric acid, nitric acid, formic acid, and acetic acid, and is preferably hydrochloric acid or sulfuric acid.

4. The method of claim 2, wherein the alkali is selected from hydroxide, carbonate, bicarbonate or basic carbonate of alkali metal or alkaline earth metal, ammonia, organic alkali, or organic amine, and is preferably sodium hydroxide or triethylamine.

5. The method of claim 1, wherein the hydrolysis is performed at a temperature of 30°C to 140°C or preferably 70°C to 110°C.

6. The method of claim 1, wherein the enantiomer of the glufosinate is L-glufosinate or D-glufosinate.

7. The method of claim 1, wherein the mixture of its enantiomers in any ratio comprises L-glufosinate and D-glufosinate in a ratio of 0.1: 99.9 to 99.9: 0.1, or preferably in a ratio of 50: 50 to 99.9: 0.1.

8. The method of claim 1, wherein
the halogen is selected from fluorine, chlorine, or bromine;
the C₁-C₆ alkyl group is selected from a methyl group, an ethyl group, a propyl group, or an isopropyl group;
the C₂-C₆ alkenyl group is selected from a vinyl group, a propenyl group, a 1-butenyl group, a 2-butenyl group, or an isobutenyl group;
the C₂-C₆ alkynyl group is selected from an ethynyl group, a propynyl group, a 1-butynyl group, or 2-butynyl group;
the C₃-C₆ cycloalkyl group is selected from a cyclopropyl group, a cyclobutyl group, a cyclopentyl group, or a cyclohexyl group;
the three-membered to six-membered heterocycloalkyl group is selected from a cyclopropyl group, a cyclobutyl group, a cyclopentyl group, or a cyclohexyl group comprising at least one heteroatom of N, O, or S;
the C₆-C₁₀ aryl group is selected from a phenyl group or a naphthyl group; and/or
the five-membered to ten-membered heteroaryl group is selected from a pyrazinyl group, a pyrazolyl group, a pyrrolyl group, a furyl group, a thienyl group, a thiazolyl group, or a pyridyl group.

9. The method of claim 1, wherein R¹, R², R³, R⁴, and R⁵ are each independently selected from hydrogen, a C₁-C₆ alkyl group, or a C₃-C₆ cycloalkyl group, and is preferably hydrogen, a methyl group, an ethyl group, a propyl group, an isopropyl group, a butyl group, an isobutyl group, a tert-butyl group, a pentyl group, a hexyl group, a cyclopropyl group, a cyclobutyl group, a cyclopentyl group, or a cyclohexyl group.

10. The method of claim 1, wherein the compound of formula (III) is prepared by subjecting a compound of formula (II) 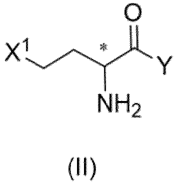 to a reaction with any one of the following compounds or mixtures: a compound of formula (IV); a compound of formula (V); a compound of formula (IV) and a compound of formula (V); a compound of formula (IV) and a compound of formula (VII); a compound of formula (V) and a compound of formula (VII); or a compound of formula (IV), a compound of formula (V), and a compound of formula (VII); 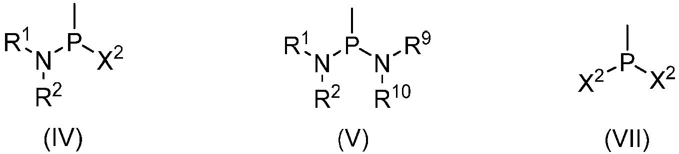 wherein:
X² is halogen;
R¹, R², X¹, Y, and * are as defined in any one of claims 1, 8 or 9; and
R⁹ and R¹⁰ are each independently selected from hydrogen, a C₁-C₆ alkyl group, a C₂-C₆ alkenyl group, a C₂-C₆ alkynyl group, a C₃-C₆ cycloalkyl group, a three-membered to six-membered heterocycloalkyl group, a C₆-C₁₀ aryl group, or a five-membered to ten-membered heteroaryl group, or R⁹ and R¹⁰ form a three-membered to six-membered heterocycloalkyl group together with the N atom to which they are attached, wherein the C₁-C₆ alkyl group, the C₂-C₆ alkenyl group, the C₂-C₆ alkynyl group, the C₃-C₆ cycloalkyl group, the three-membered to six-membered heterocycloalkyl group, the C₆-C₁₀ aryl group, or the five-membered to ten-membered heteroaryl group is optionally substituted by halogen, a carboxyl group, a hydroxyl group, a cyano group, an amino group, a nitro group, a C₁-C₃ alkyl group, a C₁-C₃ haloalkyl group, a C₁-C₃ alkoxy group, a C₃-C₆ cycloalkyl group, or a C₆-C₁₀ aryl group.

11. The method of claim 10, wherein the reaction is performed in presence of a deacid reagent.

12. The method of claim 11, wherein the deacid reagent is selected from NR¹¹R¹²R¹³, wherein R¹¹, R¹², and R¹³ are each independently selected from hydrogen, a C₁-C₆ alkyl group, a C₂-C₆ alkenyl group, a C₂-C₆ alkynyl group, a C₃-C₆ cycloalkyl group, a three-membered to six-membered heterocycloalkyl group, a C₆-C₁₀ aryl group, or a five-membered to ten-membered heteroaryl group, or any two of R¹¹, R¹², and R¹³ form a three-membered to six-membered heterocycloalkyl group together with the N atom to which they are attached, wherein the C₁-C₆ alkyl group, the C₂-C₆ alkenyl group, the C₂-C₆ alkynyl group, the C₃-C₆ cycloalkyl group, the three-membered to six-membered heterocycloalkyl group, the C₆-C₁₀ aryl group, or the five-membered to ten-membered heteroaryl group is optionally substituted by halogen, a carboxyl group, a hydroxyl group, a cyano group, an amino group, a nitro group, a C₁-C₃ alkyl group, a C₁-C₃ haloalkyl group, a C₁-C₃ alkoxy group, a C₃-C₆ cycloalkyl group, or a C₆-C₁₀ aryl group.

13. The method of claim 11, wherein a molar ratio among the compound of formula (II), total usage of the compounds of formulas (IV), (V) and (VII), and the deacid reagent is 1: (0.9-5): (0.9-5), or preferably 1: (1.05-1.5): (1.05-1.5).

14. The method of claim 10, wherein the reaction is performed in absence of a solvent or in presence of an organic solvent.

15. The method of claim 14, wherein the organic solvent is selected from an aromatic hydrocarbon solvent, an alkane solvent, a halogenated hydrocarbon solvent, an ether solvent, an ester solvent, an amide solvent, or a sulfur-containing solvent, and preferably, the organic solvent is at least one selected from toluene and chlorobenzene.

16. The method of claim 10, wherein the reaction is performed at a temperature of -20°C to 10°C for 1 to 15 hours, and then at 10°C to 120°C for 0.5 to 24 hours.

17. The method of claim 1, wherein the compound of formula (III) is prepared by a method comprising the following steps:
a) subjecting a compound of formula (II) 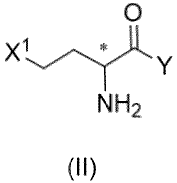 to a reaction with any one of the following compounds or mixtures: a compound of formula (IV); a compound of formula (V); a compound of formula (IV) and a compound of formula (V); a compound of formula (IV) and a compound of formula (VII); a compound of formula (V) and a compound of formula (VII); or a compound of formula (IV), a compound of formula (V), and a compound of formula (VII); 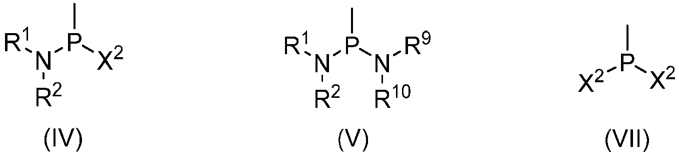 to obtain the compound of formula (VI); 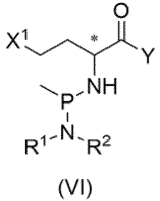 and
b) preparing the compound of formula (III) via a reaction with the compound of formula (VI);
wherein X¹, X², Y, R¹, R², R⁹, R¹⁰, and * are as defined in claim 10.

18. The method of claim 17, wherein the reaction in step a) is performed at a temperature of -20°C to 10°C for 1 to 15 hours.

19. The method of claim 17, wherein the reaction in step b) is performed at a temperature of 10°C to 120°C for 0.5 to 24 hours.

20. A method of preparing glufosinate represented by formula (I) or its salt or enantiomer, or a mixture of its enantiomers in any ratio, comprising the following steps: 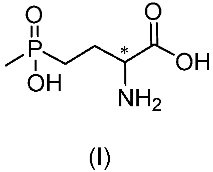 in absence of a solvent or in presence of an organic solvent, subjecting a compound of formula (II) 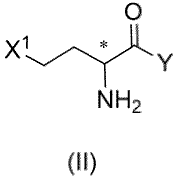 to a reaction with any one of the following compounds or mixtures: a compound of formula (IV); a compound of formula (V); a compound of formula (IV) and a compound of formula (V); a compound of formula (IV) and a compound of formula (VII); a compound of formula (V) and a compound of formula (VII); or a compound of formula (IV), a compound of formula (V), and a compound of formula (VII), to obtain an intermediate; and 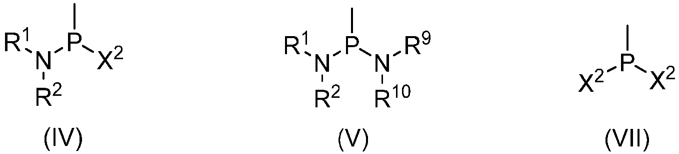
hydrolyzing the intermediate under an acidic, neutral, or alkaline condition, to obtain a compound of formula (I);
wherein X¹, X², Y, R¹, R², R⁹, R¹⁰, and * are as defined in claim 10.

21. A compound formula (III) or its salt or enantiomer, or a mixture of its enantiomers in any ratio; 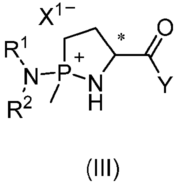 wherein X¹, Y, R¹, R², and * are as defined in any one of claims 1, 8 or 9.

22. The compound of formula (III) or its salt or enantiomer, or the mixture of its enantiomers in any ratio of claim 21, wherein the compound of formula (III) or its salt or enantiomer, or the mixture of its enantiomers in any ratio is prepared by the steps in the method of any one of claims 10 to 19.

23. A method of preparing a compound of formula (III) or its salt or enantiomer, or a mixture of its enantiomers in any ratio, comprising: 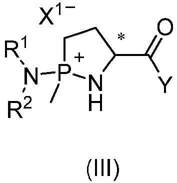 subjecting a compound of formula (II) 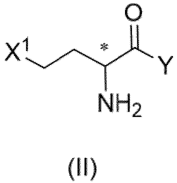 to a reaction with any one of the following compounds or mixtures: a compound of formula (IV); a compound of formula (V); a compound of formula (IV) and a compound of formula (V); a compound of formula (IV) and a compound of formula (VII); a compound of formula (V) and a compound of formula (VII); or a compound of formula (IV), a compound of formula (V), and a compound of formula (VII); 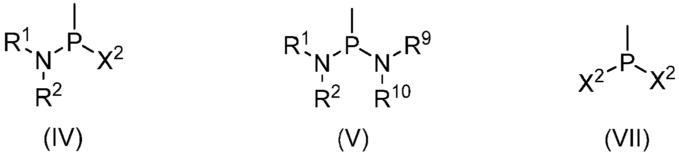 wherein X¹, X², Y, R¹, R², R⁹, R¹⁰, and * are as defined in claim 10.

24. A method of preparing a compound of formula (III) or its salt or enantiomer, or a mixture of its enantiomers in any ratio, comprising: 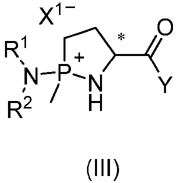 preparing the compound of formula (III) from a reaction with the compound of formula (VI); 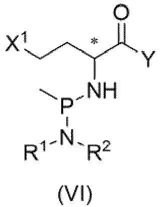 wherein X¹, Y, R¹, R², and * are as defined in claim 10.

25. A compound formula (VI) or its salt or enantiomer, or a mixture of its enantiomers in any ratio; 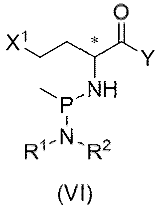 wherein X¹, Y, R¹, R², and * are as defined in any one of claims 1, 8 or 9.

26. The compound of formula (VI) or its salt or enantiomer, or the mixture of its enantiomers in any ratio of claim 25, wherein the compound of formula (VI) or its salt or enantiomer, or the mixture of its enantiomers in any ratio is prepared by the steps in the method of any one of claims 17 to 19.

27. A method of preparing a compound of formula (VI) or its salt or enantiomer, or a mixture of its enantiomers in any ratio, comprising: 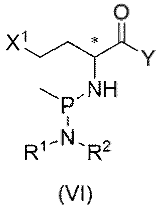 subjecting a compound of formula (II) 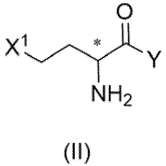 to a reaction with any one of the following compounds or mixtures: a compound of formula (IV); a compound of formula (V); a compound of formula (IV) and a compound of formula (V); a compound of formula (IV) and a compound of formula (VII); a compound of formula (V) and a compound of formula (VII); or a compound of formula (IV), a compound of formula (V), and a compound of formula (VII); 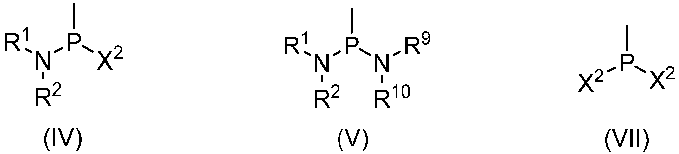 wherein X¹, X², Y, R¹, R², R⁹, R¹⁰, and * are as defined in claim 10.

28. A method of preparing a compound of formula (VI) or its salt or enantiomer, or a mixture of its enantiomers in any ratio, comprising: 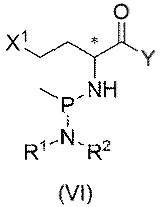 subjecting a compound of formula (II) to a reaction with a compound of formula (VII) and a compound of formula (VIII); 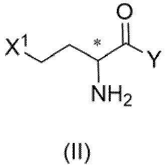 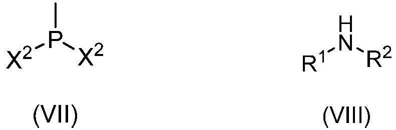 wherein X¹, X², Y, R¹, R², and * are as defined in claim 10.

29. Use of a composition in preparation of glufosinate represented by formula (I) or its salt or enantiomer, or a mixture of its enantiomers in any ratio: 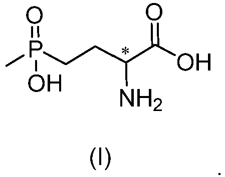
wherein the composition comprises a compound of formula (IV) and a compound of formula (V); a compound of formula (IV) and a compound of formula (VII); or a compound of formula (IV), a compound of formula (V), and a compound of formula (VII); and 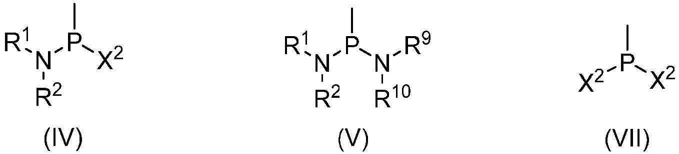
wherein X², R¹, R², R⁹, R¹⁰, and * are as defined in claim 10.

## Patentansprüche

1. Verfahren zur Herstellung von Glufosinat der Formel (I) oder seines Salzes oder Enantiomers oder einer Mischung seiner Enantiomere in einem beliebigen Verhältnis, umfassend: 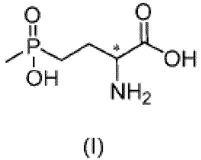 Hydrolysieren einer Verbindung der Formel (III), um eine Verbindung der Formel (I) zu erzeugen, 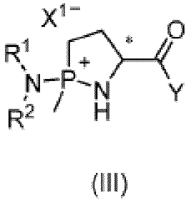 worin:
X¹ Halogen ist,
Y -OR³ oder -N(R⁴)(R⁵) ist,
R¹ und R² jeweils unabhängig voneinander ausgewählt sind aus Wasserstoff, einer C₁-C₆-Alkylgruppe, einer C₂-C₆-Alkenylgruppe, einer C₂-C₆-Alkinylgruppe, einer C₃-C₆-Cycloalkylgruppe, einer drei- bis sechsgliedrigen Heterocycloalkylgruppe, einer C₆-C₁₀-Arylgruppe oder einer fünf- bis zehngliedrigen Heteroarylgruppe, oder R¹ und R² zusammen mit dem N-Atom, an das sie gebunden sind, eine drei- bis sechsgliedrige Heterocycloalkylgruppe bilden, wobei die C₁-C₆-Alkylgruppe, die C₂-C₆-Alkenylgruppe, die C₂-C₆-Alkinylgruppe, die C₃-C₆-Cycloalkylgruppe, die dreibis sechsgliedrige Heterocycloalkylgruppe, die C₆-C₁₀-Arylgruppe oder die fünf- bis zehngliedrige Heteroarylgruppe gegebenenfalls durch Halogen substituiert ist, eine Carboxylgruppe, eine Hydroxylgruppe, eine Cyangruppe, eine Aminogruppe, eine Nitrogruppe, eine C₁-C₃-Alkylgruppe, eine C₁-C₃-Halogenalkylgruppe, eine C₁-C₃-Alkoxygruppe, eine C₃-C₆-Cycloalkylgruppe oder eine C₆-C₁₀-Arylgruppe, R³, R⁴ und R⁵ jeweils unabhängig voneinander ausgewählt sind aus Wasserstoff, einer C₁-C₆-Alkylgruppe, einer C₂-C₆-Alkenylgruppe, einer C₂-C₆-Alkinylgruppe, einer C₃-C₆-Cycloalkylgruppe, einer drei- bis sechsgliedrigen Heterocycloalkylgruppe, einer C₆-C₁₀-Arylgruppe, oder einer fünf- bis zehngliedrige Heteroarylgruppe, oder R⁴ und R⁵ bilden zusammen mit dem N-Atom, an das sie gebunden sind, eine drei- bis sechsgliedrige Heterocycloalkylgruppe, wobei die C₁-C₆-Alkylgruppe, die C₂-C₆-Alkenylgruppe, die C₂-C₆-Alkinylgruppe, die C₃-C₆-Cycloalkylgruppe, die drei- bis sechsgliedrige Heterocycloalkylgruppe, die C₆-C₁₀-Arylgruppe oder die fünf- bis zehngliedrige Heteroarylgruppe gegebenenfalls durch Halogen, eine Carboxylgruppe, eine Hydroxylgruppe, eine Cyangruppe, eine Aminogruppe, eine Nitrogruppe, eine C₁-C₃-Alkylgruppe, eine C₁-C₃-Halogenalkylgruppe, eine C₁-C₃-Alkoxygruppe, eine C₃-C₆-Cycloalkylgruppe oder eine C₆-C₁₀-Arylgruppe substituiert ist, und
* ein chirales Kohlenstoffatom bezeichnet.

2. Verfahren nach Anspruch 1, wobei die Hydrolyse in Gegenwart einer Säure oder eines Alkalis durchgeführt wird.

3. Verfahren nach Anspruch 2, wobei die Säure mindestens eine, ausgewählt aus Salzsäure, Schwefelsäure, Bromwasserstoffsäure, lodwasserstoffsäure, Phosphorsäure, Salpetersäure, Ameisensäure und Essigsäure, und vorzugsweise Salzsäure oder Schwefelsäure ist.

4. Verfahren nach Anspruch 2, wobei das Alkali ausgewählt aus Hydroxid, Carbonat, Bicarbonat oder basischem Carbonat eines Alkalimetalls oder Erdalkalimetalls, Ammoniak, organischem Alkali oder organischem Amin und vorzugsweise Natriumhydroxid oder Triethylamin ist.

5. Verfahren nach Anspruch 1, wobei die Hydrolyse bei einer Temperatur von 30°C bis 140°C oder vorzugsweise 70°C bis 110°C durchgeführt wird.

6. Verfahren nach Anspruch 1, wobei das Enantiomer des Glufosinats L-Glufosinat oder D-Glufosinat ist.

7. Verfahren nach Anspruch 1, wobei das Gemisch seiner Enantiomere in einem beliebigen Verhältnis L-Glufosinat und D-Glufosinat in einem Verhältnis von 0,1: 99,9 bis 99,9 : 0,1 oder vorzugsweise in einem Verhältnis von 50 : 50 bis 99,9 : 0,1 umfasst.

8. Verfahren nach Anspruch 1, wobei
das Halogen aus Fluor, Chlor oder Brom ausgewählt ist,
die C₁-C₆-Alkylgruppe aus einer Methylgruppe, einer Ethylgruppe, einer Propylgruppe oder einer Isopropylgruppe ausgewählt ist,
die C₂-C₆-Alkenylgruppe aus einer Vinylgruppe, einer Propenylgruppe, einer 1-Butenylgruppe, einer 2-Butenylgruppe oder einer Isobutenylgruppe ausgewählt ist,
die C₂-C₆-Alkinylgruppe aus einer Ethinylgruppe, einer Propinylgruppe, einer 1-Butinylgruppe oder einer 2-Butinylgruppe ausgewählt ist,
die C₃-C₆-Cycloalkylgruppe aus einer Cyclopropylgruppe, einer Cyclobutylgruppe, einer Cyclopentylgruppe oder einer Cyclohexylgruppe ausgewählt ist,
die dreigliedrige bis sechsgliedrige Heterocycloalkylgruppe aus einer Cyclopropylgruppe, einer Cyclobutylgruppe, einer Cyclopentylgruppe oder einer Cyclohexylgruppe ausgewählt ist, die mindestens ein Heteroatom aus N, O oder S enthält,
die C₆-C₁₀-Arylgruppe aus einer Phenylgruppe oder einer Naphthylgruppe ausgewählt ist und/oder
die fünfgliedrige bis zehngliedrige Heteroarylgruppe aus einer Pyrazinylgruppe, einer Pyrazolylgruppe, einer Pyrrolylgruppe, einer Furylgruppe, einer Thienylgruppe, einer Thiazolylgruppe oder einer Pyridylgruppe ausgewählt ist.

9. Verfahren nach Anspruch 1, wobei R¹, R², R³, R⁴ und R⁵ jeweils unabhängig voneinander aus Wasserstoff, einer C₁-C₆-Alkylgruppe oder einer C₃-C₆-Cycloalkylgruppe ausgewählt sind und vorzugsweise Wasserstoff, eine Methylgruppe, eine Ethylgruppe, eine Propylgruppe, eine Isopropylgruppe, eine Butylgruppe, eine Isobutylgruppe, eine tert-Butylgruppe, eine Pentylgruppe, eine Hexylgruppe, eine Cyclopropylgruppe, eine Cyclobutylgruppe, eine Cyclopentylgruppe oder eine Cyclohexylgruppe sind.

10. Verfahren nach Anspruch 1, wobei die Verbindung der Formel (III) hergestellt wird, indem eine Verbindung der Formel (II) 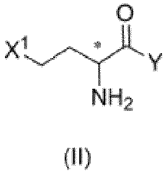 einer Reaktion mit einer der folgenden Verbindungen oder Mischungen unterzogen wird:
eine Verbindung der Formel (IV), eine Verbindung der Formel (V), eine Verbindung der Formel (IV) und eine Verbindung der Formel (V), eine Verbindung der Formel (IV) und eine Verbindung der Formel (VII), eine Verbindung der Formel (V) und eine Verbindung der Formel (VII), oder eine Verbindung der Formel (IV), eine Verbindung der Formel (V) und eine Verbindung der Formel (VII), 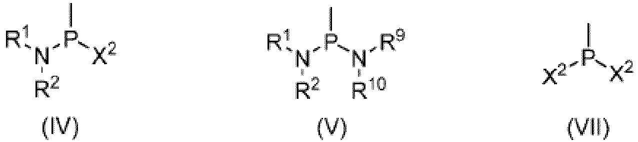 worin:
X² Halogen ist,
R¹, R², X¹, Y und * wie in einem der Ansprüche 1, 8 oder 9 definiert sind und
R⁹ und R¹⁰ jeweils unabhängig voneinander ausgewählt sind aus Wasserstoff, einer C₁-C₆-Alkylgruppe, einer C₂-C₆-Alkenylgruppe, einer C₂-C₆-Alkinylgruppe, einer C₃-C₆-Cycloalkylgruppe, einer drei- bis sechsgliedrigen Heterocycloalkylgruppe, einer C₆-C₁₀-Arylgruppe oder einer fünf- bis zehngliedrigen Heteroarylgruppe, oder R⁹ und R¹⁰ zusammen mit dem N-Atom, an das sie gebunden sind, eine drei- bis sechsgliedrige Heterocycloalkylgruppe bilden, wobei die C₁-C₆-Alkylgruppe, die C₂-C₆-Alkenylgruppe, die C₂-C₆-Alkinylgruppe, die C₃-C₆-Cycloalkylgruppe, die drei- bis sechsgliedrige Heterocycloalkylgruppe, die C₆-C₁₀-Arylgruppe oder die fünf- bis zehngliedrige Heteroarylgruppe gegebenenfalls durch Halogen, eine Carboxylgruppe, eine Hydroxylgruppe, eine Cyangruppe, eine Aminogruppe, eine Nitrogruppe, eine C₁-C₃-Alkylgruppe, eine C₁-C₃-Halogenalkylgruppe, eine C₁-C₃-Alkoxygruppe, eine C₃-C₆-Cycloalkylgruppe oder eine C₆-C₁₀-Arylgruppe substituiert ist.

11. Verfahren nach Anspruch 10, wobei die Reaktion in Gegenwart eines Entsäuerungsreagens durchgeführt wird.

12. Verfahren nach Anspruch 11, wobei das Entsäuerungsreagens ausgewählt ist aus NR¹¹R¹²R¹³, wobei R¹¹, R¹² und R¹³ jeweils unabhängig voneinander ausgewählt sind aus Wasserstoff, einer C₁-C₆-Alkylgruppe, einer C₂-C₆-Alkenylgruppe, einer C₂-C₆-Alkinylgruppe, einer C₃-C₆-Cycloalkylgruppe, einer dreibis sechsgliedrigen Heterocycloalkylgruppe, einer C₆-C₁₀-Arylgruppe oder einer fünf- bis zehngliedrigen Heteroarylgruppe, oder zwei beliebige von R¹¹, R¹² und R¹³ bilden zusammen mit dem N-Atom, an das sie gebunden sind, eine dreigliedrige bis sechsgliedrige Heterocycloalkylgruppe, wobei die C₁-C₆-Alkylgruppe, die C₂-C₆-Alkenylgruppe, die C₂-C₆-Alkinylgruppe, die C₃-C₆-Cycloalkylgruppe, die drei- bis sechsgliedrige Heterocycloalkylgruppe, die C₆-C₁₀-Arylgruppe oder die fünf- bis zehngliedrige Heteroarylgruppe gegebenenfalls durch Halogen, eine Carboxylgruppe, eine Hydroxylgruppe, eine Cyangruppe, eine Aminogruppe, eine Nitrogruppe, eine C₁-C₃-Alkylgruppe, eine C₁-C₃-Halogenalkylgruppe, eine C₁-C₃-Alkoxygruppe, eine C₃-C₆-Cycloalkylgruppe oder eine C₆-C₁₀-Arylgruppe substituiert ist.

13. Verfahren nach Anspruch 11, wobei das Molverhältnis zwischen der Verbindung der Formel (II), dem Gesamteinsatz der Verbindungen der Formeln (IV), (V) und (VII) und dem Entsäuerungsreagens 1 : (0,9-5) : (0,9-5) oder vorzugsweise 1 : (1,05-1,5) : (1,05-1,5) beträgt.

14. Verfahren nach Anspruch 10, wobei die Reaktion in Abwesenheit eines Lösungsmittels oder in Gegenwart eines organischen Lösungsmittels durchgeführt wird.

15. Verfahren nach Anspruch 14, wobei das organische Lösungsmittel aus einem aromatischen Kohlenwasserstoff-Lösungsmittel, einem Alkan-Lösungsmittel, einem halogenierten Kohlenwasserstoff-Lösungsmittel, einem Ether-Lösungsmittel, einem Ester-Lösungsmittel, einem Amid-Lösungsmittel oder einem schwefelhaltigen Lösungsmittel ausgewählt ist, und das organische Lösungsmittel vorzugsweise mindestens eines ausgewählt aus Toluol und Chlorbenzol ist.

16. Verfahren nach Anspruch 10, wobei die Reaktion bei einer Temperatur von - 20°C bis 10°C für 1 bis 15 Stunden und dann bei 10°C bis 120°C für 0,5 bis 24 Stunden durchgeführt wird.

17. Verfahren nach Anspruch 1, wobei die Verbindung der Formel (III) durch ein Verfahren hergestellt wird, das die folgenden Schritte umfasst:
a) Unterwerfen einer Verbindung der Formel (II) 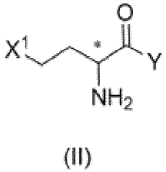 einer Reaktion mit einer der folgenden Verbindungen oder Mischungen: einer Verbindung der Formel (IV), einer Verbindung der Formel (V), einer Verbindung der Formel (IV) und einer Verbindung der Formel (V), einer Verbindung der Formel (IV) und einer Verbindung der Formel (VII), einer Verbindung der Formel (V) und einer Verbindung der Formel (VII), oder einer Verbindung der Formel (IV), einer Verbindung der Formel (V) und einer Verbindung der Formel (VII), 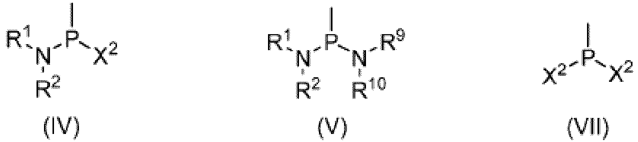 um die Verbindung der Formel (VI) zu erhalten, 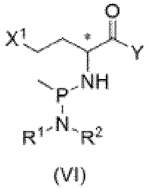 und
b) Herstellen der Verbindung der Formel (III) durch eine Reaktion mit der Verbindung der Formel (VI),
worin X¹, X², Y, R¹, R², R⁹, R¹⁰ und * wie in Anspruch 10 definiert sind.

18. Verfahren nach Anspruch 17, wobei die Reaktion in Schritt a) bei einer Temperatur von -20°C bis 10°C für 1 bis 15 Stunden durchgeführt wird.

19. Verfahren nach Anspruch 17, wobei die Reaktion in Schritt b) bei einer Temperatur von 10°C bis 120°C für 0,5 bis 24 Stunden durchgeführt wird.

20. Verfahren zur Herstellung von Glufosinat der Formel (I) oder seines Salzes oder Enantiomers oder einer Mischung seiner Enantiomere in beliebigem Verhältnis, umfassend die folgenden Schritte: 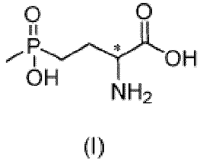 Unterwerfen einer Verbindung der Formel (II) in Abwesenheit eines Lösungsmittels oder in Gegenwart eines organischen Lösungsmittels 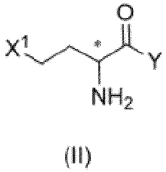 einer Reaktion mit einer der folgenden Verbindungen oder Mischungen: einer Verbindung der Formel (IV), einer Verbindung der Formel (V), einer Verbindung der Formel (IV) und einer Verbindung der Formel (V), einer Verbindung der Formel (IV) und einer Verbindung der Formel (VII), einer Verbindung der Formel (V) und einer Verbindung der Formel (VII), oder einer Verbindung der Formel (IV), einer Verbindung der Formel (V) und einer Verbindung der Formel (VII), um ein Zwischenprodukt zu erhalten, und 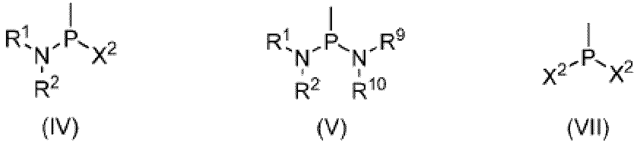
Hydrolysieren des Zwischenprodukts unter sauren, neutralen oder alkalischen Bedingungen, um eine Verbindung der Formel (I) zu erhalten,
worin X¹, X², Y, R¹, R², R⁹, R¹⁰ und * wie in Anspruch 10 definiert sind.

21. Verbindung der Formel (III) oder ihr Salz oder Enantiomer oder eine Mischung ihrer Enantiomere in einem beliebigen Verhältnis, 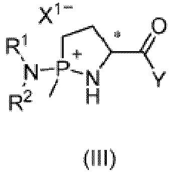 worin X¹, Y, R¹, R² und * wie in einem der Ansprüche 1, 8 oder 9 definiert sind.

22. Verbindung der Formel (III) oder ihr Salz oder Enantiomer oder die Mischung ihrer Enantiomere in einem beliebigen Verhältnis nach Anspruch 21, wobei die Verbindung der Formel (III) oder ihr Salz oder ihr Enantiomer oder die Mischung ihrer Enantiomere in einem beliebigen Verhältnis durch die Schritte des Verfahrens nach einem der Ansprüche 10 bis 19 hergestellt wird.

23. Verfahren zur Herstellung einer Verbindung der Formel (III) oder ihres Salzes oder Enantiomers oder einer Mischung ihrer Enantiomere in einem beliebigen Verhältnis, umfassend: 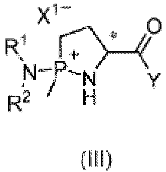 Unterwerfen einer Verbindung der Formel (II) 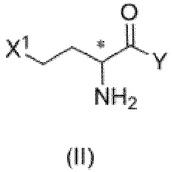 einer Reaktion mit einer der folgenden Verbindungen oder Mischungen: einer Verbindung der Formel (IV), einer Verbindung der Formel (V), einer Verbindung der Formel (IV) und einer Verbindung der Formel (V), einer Verbindung der Formel (IV) und einer Verbindung der Formel (VII), einer Verbindung der Formel (V) und einer Verbindung der Formel (VII), oder einer Verbindung der Formel (IV), einer Verbindung der Formel (V) und einer Verbindung der Formel (VII), 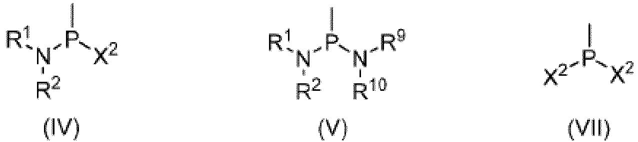 worin X¹, X², Y, R¹, R², R⁹, R¹⁰ und * wie in Anspruch 10 definiert sind.

24. Verfahren zur Herstellung einer Verbindung der Formel (III) oder ihres Salzes oder Enantiomers oder einer Mischung ihrer Enantiomere in einem beliebigen Verhältnis, umfassend: 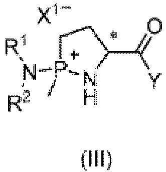 Herstellung der Verbindung der Formel (III) aus einer Reaktion mit der Verbindung der Formel (VI), 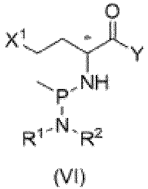 worin X¹, Y, R¹, R² und * wie in Anspruch 10 definiert sind.

25. Verbindung der Formel (VI) oder ihr Salz oder Enantiomer oder eine Mischung ihrer Enantiomere in einem beliebigen Verhältnis, 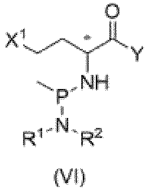 worin X¹, Y, R¹, R² und * wie in einem der Ansprüche 1, 8 oder 9 definiert sind.

26. Verbindung der Formel (VI) oder ihr Salz oder Enantiomer oder die Mischung ihrer Enantiomere in einem beliebigen Verhältnis nach Anspruch 25, wobei die Verbindung der Formel (VI) oder ihr Salz oder Enantiomer oder die Mischung ihrer Enantiomere in einem beliebigen Verhältnis durch die Schritte des Verfahrens nach einem der Ansprüche 17 bis 19 hergestellt wird.

27. Verfahren zur Herstellung einer Verbindung der Formel (VI) oder ihres Salzes oder Enantiomers oder einer Mischung ihrer Enantiomere in einem beliebigen Verhältnis, umfassend: 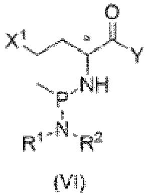 Unterwerfen einer Verbindung der Formel (II) 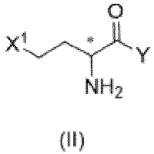 einer Reaktion mit einer der folgenden Verbindungen oder Mischungen: eine Verbindung der Formel (IV), eine Verbindung der Formel (V), eine Verbindung der Formel (IV) und eine Verbindung der Formel (V), eine Verbindung der Formel (IV) und eine Verbindung der Formel (VII), eine Verbindung der Formel (V) und eine Verbindung der Formel (VII), oder eine Verbindung der Formel (IV), eine Verbindung der Formel (V) und eine Verbindung der Formel (VII), 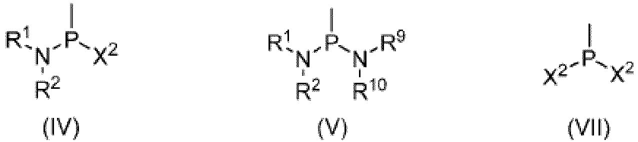 worin X¹, X², Y, R¹, R², R⁹, R¹⁰ und * wie in Anspruch 10 definiert sind.

28. Verfahren zur Herstellung einer Verbindung der Formel (VI) oder ihres Salzes oder Enantiomers oder einer Mischung ihrer Enantiomere in einem beliebigen Verhältnis, umfassend: 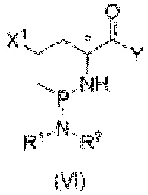 Unterwerfen einer Verbindung der Formel (II) einer Reaktion mit einer Verbindung der Formel (VII) und einer Verbindung der Formel (VIII), 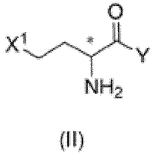 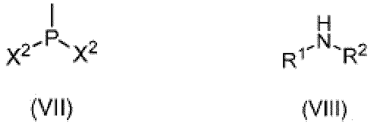 worin X¹, X², Y, R¹, R² und * wie in Anspruch 10 definiert sind.

29. Verwendung einer Zusammensetzung zur Herstellung von Glufosinat der Formel (I) oder seines Salzes oder Enantiomers oder einer Mischung seiner Enantiomere in einem beliebigen Verhältnis: 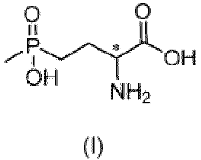
wobei die Zusammensetzung eine Verbindung der Formel (IV) und eine Verbindung der Formel (V), eine Verbindung der Formel (IV) und eine Verbindung der Formel (VII), oder eine Verbindung der Formel (IV), eine Verbindung der Formel (V) und eine Verbindung der Formel (VII) umfasst, und 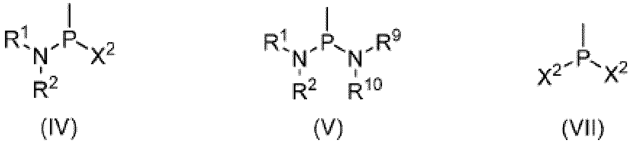
worin X², R¹, R², R⁹, R¹⁰ und * wie in Anspruch 10 definiert sind.

## Revendications

1. Procédé de préparation de glufosinate représenté par la formule (I) ou de son sel ou énantiomère, ou d'un mélange de ses énantiomères selon tout rapport, comprenant : 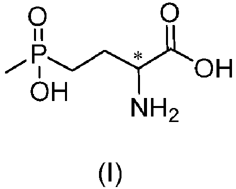 l'hydrolysation d'un composé de formule (III) pour générer un composé de formule (I) ; 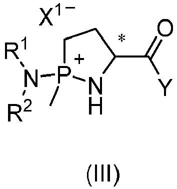 dans lequel :
X1 est un halogène ;
Y est -OR³ ou -N(R⁴)(R⁵) ;
R¹ et R² sont chacun indépendamment sélectionnés parmi l'hydrogène, un groupe alkyle en C₁-C₆, un groupe alcényle en C₂-C₆, un groupe alcynyle en C₂-C₆, un groupe cycloalkyle en C₃-C₆, un groupe hétérocycloalkyle de trois chaînons à six chaînons, un groupe aryle en C₆-C₁₀, ou un groupe hétéroaryle de cinq chaînons à dix chaînons, ou R¹ et R² forment un groupe hétérocycloalkyle de trois chaînons à six chaînons avec l'atome N auquel ils sont attachés, dans lequel le groupe alkyle en C₁-C₆, le groupe alcényle en C₂-C₆, le groupe alcynyle en C₂-C₆, le groupe cycloalkyle en C₃-C₆, le groupe hétérocycloalkyle de trois chaînons à six chaînons, le groupe aryle en C₆-C₁₀, ou le groupe hétéroaryle de cinq chaînons à dix chaînons est facultativement substitué par un halogène, un groupe carboxyle, un groupe hydroxyle, un groupe cyano, un groupe amino, un groupe nitro, un groupe alkyle en C₁-C₃, un groupe haloalkyle en C₁-C₃, un groupe alcoxy en C₁-C₃, un groupe cycloalkyle en C₃-C₆ ou un groupe aryle en C₆-C₁₀ ;
R³, R⁴ et R⁵ sont chacun indépendamment sélectionnés parmi l'hydrogène, un groupe alkyle en C₁-C₆, un groupe alcényle en C₂-C₆, un groupe alcynyle en C₂-C₆, un groupe cycloalkyle en C₃-C₆, un groupe hétérocycloalkyle de trois chaînons à six chaînons, un groupe aryle en C₆-C₁₀, ou un groupe hétéroaryle de cinq chaînons à dix chaînons, ou R⁴ et R⁵ forment un groupe hétérocycloalkyle de trois chaînons à six chaînons avec l'atome N auquel ils sont attachés, dans lequel le groupe alkyle en C₁-C₆, le groupe alcényle en C₂-C₆, le groupe alcynyle en C₂-C₆, le groupe cycloalkyle en C₃-C₆, le groupe hétérocycloalkyle de trois chaînons à six chaînons, le groupe aryle en C₆-C₁₀, ou le groupe hétéroaryle de cinq chaînons à dix chaînons est facultativement substitué par un halogène, un groupe carboxyle, un groupe hydroxyle, un groupe cyano, un groupe amino, un groupe nitro, un groupe alkyle en C₁-C₃, un groupe haloalkyle en C₁-C₃, un groupe alcoxy en C₁-C₃, un groupe cycloalkyle en C₃-C₆ ou un groupe aryle en C₆-C₁₀ ; et
* désigne un atome de carbone chiral.

2. Procédé selon la revendication 1, dans lequel l'hydrolyse est mise en œuvre en présence d'un acide ou d'un alcali.

3. Procédé selon la revendication 2, dans lequel l'acide est au moins un sélectionné parmi l'acide chlorhydrique, l'acide sulfurique, l'acide bromhydrique, l'acide iodhydrique, l'acide phosphorique, l'acide nitrique, l'acide formique et l'acide acétique, et est de préférence de l'acide chlorhydrique ou de l'acide sulfurique.

4. Procédé selon la revendication 2, dans lequel l'alcali est sélectionné parmi un hydroxyde, un carbonate, un bicarbonate ou un carbonate basique de métal alcalin ou de métal alcalino-terreux, de l'ammoniaque, un alcali organique ou un amine organique, et est de préférence de l'hydroxyde de sodium ou du triéthylamine.

5. Procédé selon la revendication 1, dans lequel l'hydrolyse est mise en œuvre à une température de 30 °C à 140 °C ou de préférence de 70 °C à 110 °C.

6. Procédé selon la revendication 1, dans lequel l'énantiomère du glufosinate est du L-glufosinate ou du D-glufosinate.

7. Procédé selon la revendication 1, dans lequel le mélange de ses énantiomères selon tout rapport comprend du L-glufosinate et du D-glufosinate selon un rapport de 0,1:99,9 à 99,9:0,1, ou de préférence selon un rapport de 50:50 à 99,9:0,1.

8. Procédé selon la revendication 1, dans lequel
l'halogène est sélectionné parmi le fluor, le chlore ou le brome ;
le groupe alkyle en C₁-C₆ est sélectionné parmi un groupe méthyle, un groupe éthyle, un groupe propyle ou un groupe isopropyle ;
le groupe alcényle en C₂-C₆ est sélectionné parmi un groupe vinyle, un groupe propényle, un groupe 1-butényle, un groupe 2-butényle ou un groupe isobutényle ;
le groupe alcynyle en C₂-C₆ est sélectionné parmi un groupe éthynyle, un groupe propynyle, un groupe 1-butynyle ou un groupe 2-butynyle ;
le groupe cycloalkyle en C₃-C₆ est sélectionné parmi un groupe cyclopropyle, un groupe cyclobutyle, un groupe cyclopentyle ou un groupe cyclohexyle ;
le groupe hétérocycloalkyle de trois chaînons à six chaînons est sélectionné parmi un groupe cyclopropyle, un groupe cyclobutyle, un groupe cyclopentyle ou un groupe cyclohexyle comprenant au moins un hétéroatome de N, O ou S ;
le groupe aryle en C₆-C₁₀ est sélectionné parmi un groupe phényle ou un groupe naphtyle ; et/ou
le groupe hétéroaryle de cinq chaînons à dix chaînons est sélectionné parmi un groupe pyrazinyle, un groupe pyrazolyle, un groupe pyrrolyle, un groupe furyle, un groupe thiényle, un groupe thiazolyle ou un groupe pyridyle.

9. Procédé selon la revendication 1, dans lequel R¹, R², R³, R⁴ et R⁵ sont chacun indépendamment sélectionnés parmi l'hydrogène, un groupe alkyle en C₁-C₆ ou un groupe cycloalkyle en C₃-C₆, et est de préférence de l'hydrogène, un groupe méthyle, un groupe éthyle, un groupe propyle, un groupe isopropyle, un groupe butyle, un groupe isobutyle, un groupe tert-butyle, un groupe pentyle, un groupe hexyle, un groupe cyclopropyle, un groupe cyclobutyle, un groupe cyclopentyle ou un groupe cyclohexyle.

10. Procédé selon la revendication 1, dans lequel le composé de formule (III) est préparé en soumettant un composé de formule (II) 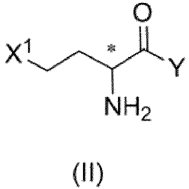 à une réaction avec l'un quelconque des composés ou mélanges suivants : un composé de formule (IV) ; un composé de formule (V) ; un composé de formule (IV) et un composé de formule (V) ; un composé de formule (IV) et un composé de formule (VII) ; un composé de formule (V) et un composé de formule (VII) ; ou un composé de formule (IV), un composé de formule (V) et un composé de formule (VII) ; 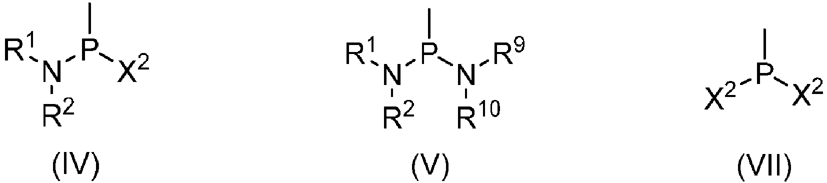 dans lequel :
X² est un halogène ;
R¹, R², X¹, Y et * sont tels que définis dans l'une quelconque des revendications 1, 8 ou 9 ; et
R⁹ et R¹⁰ sont chacun indépendamment sélectionnés parmi l'hydrogène, un groupe alkyle en C₁-C₆, un groupe alcényle en C₂-C₆, un groupe alcynyle en C₂-C₆, un groupe cycloalkyle en C₃-C₆, un groupe hétérocycloalkyle de trois chaînons à six chaînons, un groupe aryle en C₆-C₁₀, ou un groupe hétéroaryle de cinq chaînons à dix chaînons, ou R⁹ et R¹⁰ forment un groupe hétérocycloalkyle de trois chaînons à six chaînons avec l'atome N auquel ils sont attachés, dans lequel le groupe alkyle en C₁-C₆, le groupe alcényle en C₂-C₆, le groupe alcynyle en C₂-C₆, le groupe cycloalkyle en C₃-C₆, le groupe hétérocycloalkyle de trois chaînons à six chaînons, le groupe aryle en C₆-C₁₀, ou le groupe hétéroaryle de cinq chaînons à dix chaînons est facultativement substitué par un halogène, un groupe carboxyle, un groupe hydroxyle, un groupe cyano, un groupe amino, un groupe nitro, un groupe alkyle en C₁-C₃, un groupe haloalkyle en C₁-C₃, un groupe alcoxy en C₁-C₃, un groupe cycloalkyle en C₃-C₆ ou un groupe aryle en C₈-C₁₀.

11. Procédé selon la revendication 10, dans lequel la réaction est mise en œuvre en présence d'un réactif désacidifiant.

12. Procédé selon la revendication 11, dans lequel le réactif désacidifiant est sélectionné parmi NR¹¹R¹²R¹³, dans lequel R¹¹, R¹² et R¹³ sont chacun indépendamment sélectionnés parmi l'hydrogène, un groupe alkyle en C₁-C₆, un groupe alcényle en C₂-C₆, un groupe alcynyle en C₂-C₆, un groupe cycloalkyle en C₃-C₆, un groupe hétérocycloalkyle de trois chaînons à six chaînons, un groupe aryle en C₆-C₁₀, ou un groupe hétéroaryle de cinq chaînons à dix chaînons, ou deux quelconques parmi R¹¹, R¹² et R¹³ forment un groupe hétérocycloalkyle de trois chaînons à six chaînons avec l'atome N auquel ils sont attachés, dans lequel le groupe alkyle en C₁-C₆, le groupe alcényle en C₂-C₆, le groupe alcynyle en C₂-C₆, le groupe cycloalkyle en C₃-C₆, le groupe hétérocycloalkyle de trois chaînons à six chaînons, le groupe aryle en C₆-C₁₀, ou le groupe hétéroaryle de cinq chaînons à dix chaînons est facultativement substitué par un halogène, un groupe carboxyle, un groupe hydroxyle, un groupe cyano, un groupe amino, un groupe nitro, un groupe alkyle en C₁-C₃, un groupe haloalkyle en C₁-C₃, un groupe alcoxy en C₁-C₃, un groupe cycloalkyle en C₃-C₆ ou un groupe aryle en C₆-C₁₀.

13. Procédé selon la revendication 11, dans lequel un rapport molaire entre le composé de formule (II), l'usage total des composés de formules (IV), (V) et (VII), et le réactif désacidifiant est de 1:( , - ):( , - ),
**préférence de** 1:( , - , ):( , - , ).

14. Procédé selon la revendication 10, dans lequel la réaction est mise en œuvre en l'absence d'un solvant ou en présence d'un solvant organique.

15. Procédé selon la revendication 14, dans lequel le solvant organique est sélectionné parmi un solvant d'hydrocarbures aromatiques, un solvant d'alcane, un solvant d'hydrocarbures halogénés, un solvant d'éther, un solvant d'ester, un solvant d'amide ou un solvant contenant du soufre, et de préférence, le solvant organique est au moins un sélectionné parmi le toluène et le chlorobenzène.

16. Procédé selon la revendication 10, dans lequel la réaction est mise en œuvre à une température de -20 °C à 10 °C pendant 1 à 15 heures, puis à 10 °C à 120 °C pendant 30 minutes à 24 heures.

17. Procédé selon la revendication 1, dans lequel le composé de formule (III) est préparé par un procédé comprenant les étapes suivantes consistant à :
a) soumettre un composé de formule (II) 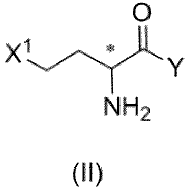
à une réaction avec l'un quelconque des composés ou mélanges suivants : un composé de formule (IV) ; un composé de formule (V) ; un composé de formule (IV) et un composé de formule (V) ; un composé de formule (IV) et un composé de formule (VII) ; un composé de formule (V) et un composé de formule (VII) ; ou un composé de formule (IV), un composé de formule (V) et un composé de formule (VII) ; 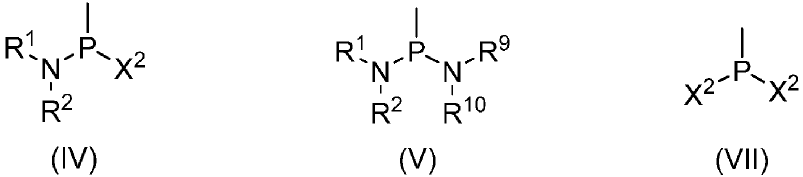
pour obtenir le composé de formule (VI) ; 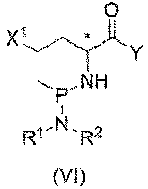 et
b) préparer le composé de formule (III) via une réaction avec le composé de formule (VI) ;
dans lequel X¹, X², Y, R¹, R², R⁹, R¹⁰ et * sont tels que définis dans la revendication 10.

18. Procédé selon la revendication 17, dans lequel la réaction à l'étape a) est mise en œuvre à une température de -20 °C à 10 °C pendant 1 à 15 heures.

19. Procédé selon la revendication 17, dans lequel la réaction à l'étape b) est mise en œuvre à une température de 10 °C à 120 °C pendant 30 minutes à 24 heures.

20. Procédé de préparation de glufosinate représenté par la formule (I) ou de son sel ou énantiomère, ou d'un mélange de ses énantiomères selon tout rapport, comprenant les étapes suivantes consistant à : 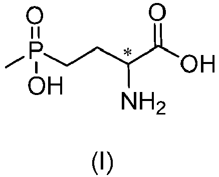
en l'absence d'un solvant ou en présence d'un solvant organique, soumettre un composé de formule (II) 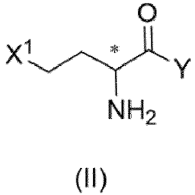
à une réaction avec l'un quelconque des composés ou mélanges suivants : un composé de formule (IV) ; un composé de formule (V) ; un composé de formule (IV) et un composé de formule (V) ; un composé de formule (IV) et un composé de formule (VII) ; un composé de formule (V) et un composé de formule (VII) ; ou un composé de formule (IV), un composé de formule (V) et un composé de formule (VII), pour obtenir un produit intermédiaire ; et 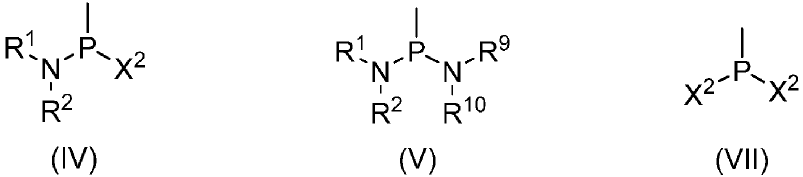
hydrolyser le produit intermédiaire dans un état acide, neutre ou alcalin, pour obtenir un composé de formule (I) ;
dans lequel X¹, X², Y, R¹, R², R⁹, R¹⁰ et * sont tels que définis dans la revendication 10.

21. Composé de formule (III) ou son sel ou énantiomère, ou mélange de ses énantiomères selon tout rapport ; 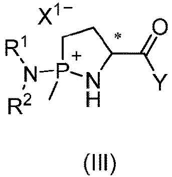 dans lequel X¹, Y, R¹, R² et * sont tels que définis dans l'une quelconque des revendications 1, 8 ou 9.

22. Composé de formule (III) ou son sel ou énantiomère, ou mélange de ses énantiomères selon tout rapport selon la revendication 21, dans lequel le composé de formule (III) ou son sel ou énantiomère, ou le mélange de ses énantiomères selon tout rapport est préparé par les étapes du procédé selon l'une quelconque des revendications 10 à 19.

23. Procédé de préparation d'un composé de formule (III) ou de son sel ou énantiomère, ou d'un mélange de ses énantiomères selon tout rapport, comprenant l'étape consistant à : 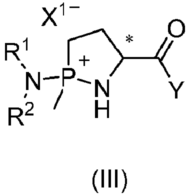 soumettre un composé de formule (II) 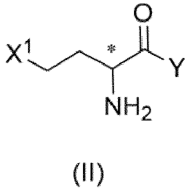
à une réaction avec l'un quelconque des composés ou mélanges suivants : un composé de formule (IV) ; un composé de formule (V) ; un composé de formule (IV) et un composé de formule (V) ; un composé de formule (IV) et un composé de formule (VII) ; un composé de formule (V) et un composé de formule (VII) ; ou un composé de formule (IV), un composé de formule (V) et un composé de formule (VII) ; 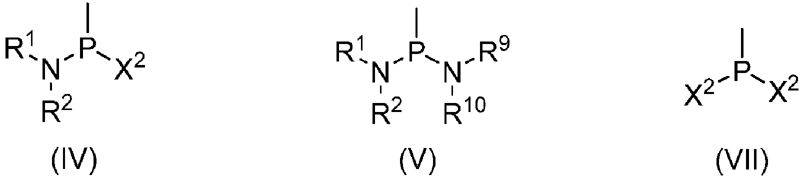
dans lequel X¹, X², Y, R¹, R², R⁹, R¹⁰ et * sont tels que définis dans la revendication 10.

24. Procédé de préparation d'un composé de formule (III) ou de son sel ou énantiomère, ou d'un mélange de ses énantiomères selon tout rapport, comprenant l'étape consistant à : 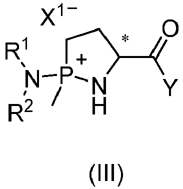
préparer le composé de formule (III) à partir d'une réaction avec le composé de formule (VI) ; 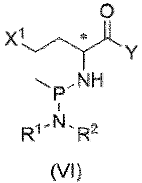
dans lequel X¹, Y, R¹, R² et * sont tels que définis dans la revendication 10.

25. Composé de formule (VI) ou son sel ou énantiomère, ou mélange de ses énantiomères selon tout rapport ; 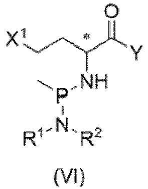 dans lequel X¹, Y, R¹, R² et * sont tels que définis dans l'une quelconque des revendications 1, 8 ou 9.

26. Composé de formule (VI) ou son sel ou énantiomère, ou mélange de ses énantiomères selon tout rapport selon la revendication 25, dans lequel le composé de formule (VI) ou son sel ou énantiomère, ou le mélange de ses énantiomères selon tout rapport est préparé par les étapes du procédé selon l'une quelconque des revendications 17 à 19.

27. Procédé de préparation d'un composé de formule (VI) ou de son sel ou énantiomère, ou d'un mélange de ses énantiomères selon tout rapport, comprenant l'étape consistant à : 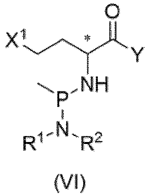
soumettre un composé de formule (II) 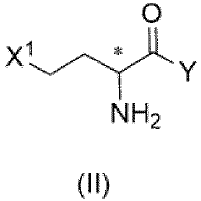
à une réaction avec l'un quelconque des composés ou mélanges suivants : un composé de formule (IV) ; un composé de formule (V) ; un composé de formule (IV) et un composé de formule (V) ; un composé de formule (IV) et un composé de formule (VII) ; un composé de formule (V) et un composé de formule (VII) ; ou un composé de formule (IV), un composé de formule (V) et un composé de formule (VII) ; 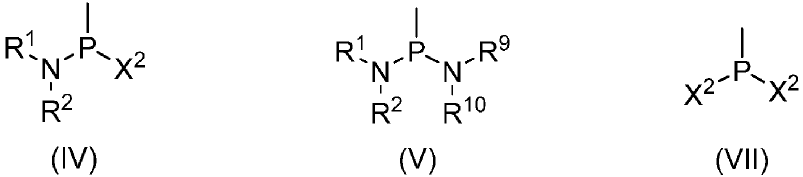
dans lequel X¹, X², Y, R¹, R², R⁹, R¹⁰ et * sont tels que définis dans la revendication 10.

28. Procédé de préparation d'un composé de formule (VI) ou de son sel ou énantiomère, ou d'un mélange de ses énantiomères selon tout rapport, comprenant l'étape consistant à : 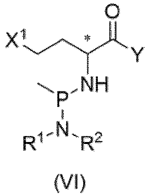
soumettre un composé de formule (II) à une réaction avec un composé de formule (VII) et un composé de formule (VIII) ; 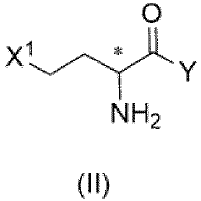 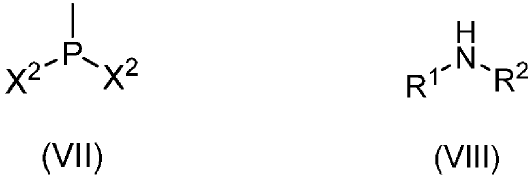
dans lequel X¹, X², Y, R¹, R² et * sont tels que définis dans la revendication 10.

29. Utilisation d'une composition dans la préparation de glufosinate représenté par la formule (I) ou de son sel ou énantiomère, ou d'un mélange de ses énantiomères selon tout rapport : 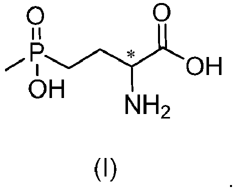
dans laquelle la composition comprend un composé de formule (IV) et un composé de formule (V) ; un composé de formule (IV) et un composé de formule (VII) ; ou un composé de formule (IV), un composé de formule (V) et un composé de formule (VII) ; et 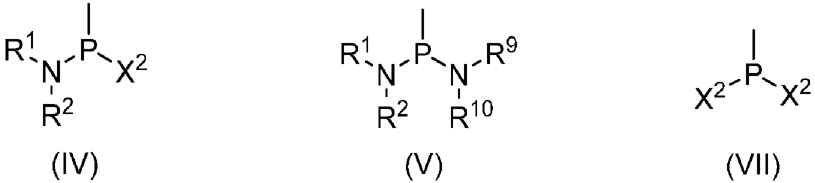
dans lequel X², R¹, R², R⁹, R¹⁰ et * sont tels que définis dans la revendication 10.
